# EUROPEAN PATENT APPLICATION

(11) **EP 2 657 829 A2**
(43) Date of publication of application: **30.10.2013**
(21) Application number: 13164678.8
(22) Date of filing: 22.04.2013
(51) Int. Cl.: G06F 3/0488

(54) **Method of adjusting size of window and electronic device therefor**

(30) Priority: 23.04.2012 KR 20120042055
(71) Applicant: Samsung Electronics Co., Ltd, Gyeonggi-do 443-742 (KR)
(72) Inventor: Kim, In-Soo, Seoul (KR); Kim, Yong-Seok, Gyeonggi-do (KR); Kim, Hyun-Jung, Seoul (KR); Lee, Ju-Seung, Gyeonggi-do (KR)
(74) Representative: Nederlandsch Octrooibureau

(57) **Abstract**

An apparatus and method for adjusting a size of a window in an electronic device by sensing a multi-touch for the window and selectively adjusting a size of the window according to user's manipulation of multi-touched points.

## Description

### BACKGROUND OF THE INVENTION

### 1. Field of the Invention

The present invention relates to an electronic device. More particularly, the present invention relates to an apparatus and method for adjusting a size of a window in an electronic device.

### 2. Description of the Related Art

Portable electronic devices have been developed to provide various multimedia services such as a voice and video communication service, an information input and output service, and a data storage service.

As an amount of information that must be processed and displayed at each of the portable electronic devices is increased, there is a growing need for a larger display unit.

To this end, there is a need for an improved ways to manage multiple windows shown on a touch screen during when multiple programs are operating.

### SUMMARY OF THE INVENTION

Accordingly, an aspect of the present invention is to provide an apparatus and method for adjusting a size of a window in an electronic device.

Another aspect of the present invention is to provide an apparatus and method for adjusting a size of a window in an electronic device which supports a multi-window mode.

Another aspect of the present invention is to provide an apparatus and method for adjusting a size of a window according to various touch inputs in an electronic device having a touch screen.

Another aspect of the present invention is to provide an apparatus and method for adjusting a size of a window according to touch inputs in a particular region in an electronic device having a touch screen.

Another aspect of the present invention is to provide an apparatus and method for adjusting a size of a window according to multi-touch input in predetermined criteria in an electronic device having a touch screen.

In accordance with an aspect of the present invention, a method of adjusting a size of a window in an electronic device having a touch includes sensing a multi-touch points/contacts in a particular window and adjusting a size of the window according to a change in the multi-touched points, wherein one of the multi-touched point is stationary and the other multi-touched point moves in relation to the stationary point.

In accordance with another aspect of the present invention, an electronic device comprising a touch screen; a memory; and a processor coupled to the memory, the processor configured to: sense multi-touch points in a particular window; and adjust a size of the window according to a change in the multi-touched points, wherein one of the multi-touched point is stationary and the other multi-touched point moves in relation to the stationary point.

In accordance with an aspect of the present invention, a method of adjusting a size of a window in an electronic device having a touch includes sensing multi-touch in a first window; and adjusting a size of the first window according to a change of the multi-touched points.

In accordance with an aspect of the present invention, a method of adjusting a size of a window in an electronic device having a touch includes sensing a touch in a first window; and adjusting a size of the first window according to change of the touched point.

In accordance with another aspect of the present invention, an electronic device comprising a touch screen; a memory; and a processor coupled to the memory, the processor configured to: sense multi-touch in a first window; and adjust a size of the first window according to a change of the multi-touched points.

In accordance with another aspect of the present invention, an electronic device comprising a touch screen; a memory; and a processor coupled to the memory, the processor configured to: sense touch in a first window; and adjust a size of the first window according to a change of the touched points.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:
FIG. 1 is a block diagram illustrating configuration of an electronic device according to one embodiment of the present invention;
FIG. 2 is a block diagram illustrating configuration of a processor unit according to another embodiment of the present invention;
FIG. 3 is a flowchart illustrating a process of adjusting a size of a window in consideration of multi-touch and drag information according to an embodiment of the present invention;
FIG. 4 is a flowchart illustrating a process of adjusting a size of a window in consideration of multi-touch and drag information according to another embodiment of the present invention;
FIGs. 5A to 5H are screens illustrating a process of adjusting a size of a window in consideration of multi-touch and drag information according to an embodiment of the present invention;
FIG. 6 is a flowchart illustrating a process of adjusting a size of a window in consideration of multi-touch according to an embodiment of the present invention;
FIG. 7 is a flowchart illustrating a process of adjusting a window size in consideration of a multi-touch according to another embodiment of the present invention;
FIGs. 8A to 8D are screens illustrating a process of adjusting a size of a window in consideration of a multi-touch according to an embodiment of the present invention;
FIG. 9 is a flowchart illustrating a process of adjusting a size of a window in consideration of a reference point and touch information according to another embodiment of the present invention;
FIGs. 10A to 10C are screens illustrating a process of adjusting a size of a window in consideration of a reference point and touch information according to an embodiment of the present invention;
FIG. 11 is a flowchart illustrating a process of adjusting a size of a window in consideration of drag information according to another embodiment of the present invention;
FIG. 12 is a flowchart illustrating a process of adjusting a size of a window in consideration of drag information according to another embodiment of the present invention;
FIGs. 13A to 13G are screens illustrating a process of adjusting a size of a window in consideration of drag information according to one embodiment of the present invention;
FIG. 14 is a flowchart illustrating a process of enlarging a size of a window in consideration of touch information according to another embodiment of the present invention;
FIGs. 15A and 15B are screens illustrating a process of enlarging a size of a window in consideration of touch information according to one embodiment of the present invention;
FIG. 16 is a flowchart illustrating a process of reducing a size of a window in consideration of touch information according to another embodiment of the present invention; and
FIGs. 17A and 17B are screens illustrating a process of adjusting a size of a window in consideration of touch information according to one embodiment of the present invention.

### DETAILED DESCRIPTION OF EXEMPLARY EMBODIMENTS

Exemplary embodiments of the present invention will be described herein below with reference to the accompanying drawings. For the purposes of clarity and simplicity, well-known functions or constructions are not described in detail as they would obscure the invention in unnecessary detail.

Hereinafter, a description will be given for a method and apparatus of adjusting a size of a window in an electronic device having a touch screen. Herein the window means a user interface screen for providing a service according to an application program.

Hereinafter, the electronic device may be any one of a mobile communication terminal having a touch screen, a Personal Digital Assistant (PDA), a laptop, a smart phone, a netbook, a television, a Mobile Internet Device (MID), a Ultra Mobile Personal Computer (PC), a tablet PC, a navigation device, a Moving Picture Experts Group (MPEG) layer 3 (MP3) player, etc.

Hereinafter, it is assumed that the electronic device supports a multi-window. That is, it is assumed that the electronic device may display user interface screens for a plurality of application programs simultaneously on a display unit. However, the electronic device may adjust a size of a window equally when displaying only one window.

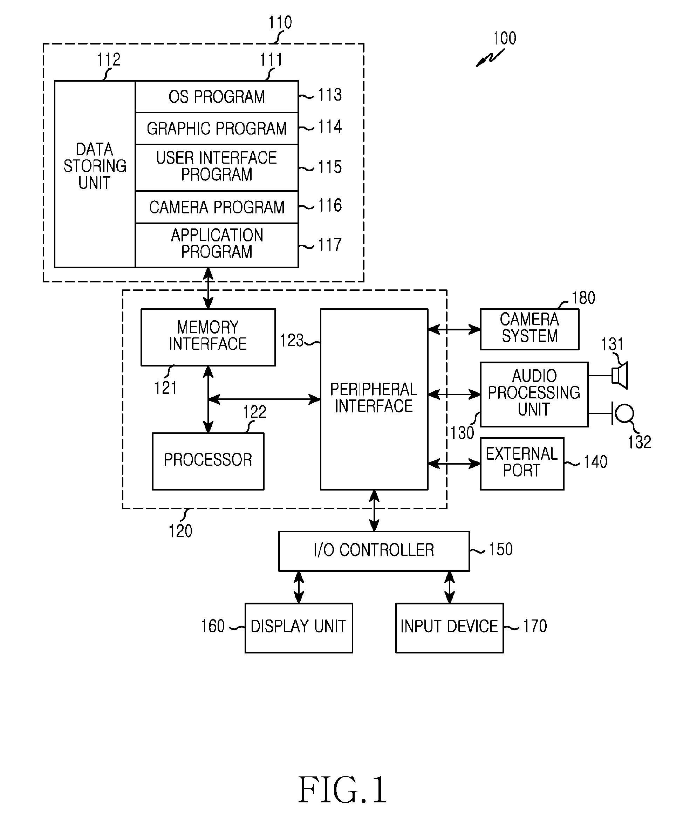

FIG. 1 is a block diagram illustrating configuration of an electronic device according to one embodiment of the present invention.

As shown in FIG. 1, the electronic device denoted by 100 includes a memory 110, a processor unit 120, an audio processing unit 130, an external port 140, an Input/Output (I/O) controller 150, a display unit 160, an input device 170, and a camera system 180. Herein, the memory 110 and the external port 150 may be a plurality of memories and external ports, respectively.

A description will be given for respective components are as follows.

The memory 110 includes a program storing unit 111 for storing a program for controlling an operation of the electronic device 100 and a data storing unit 112 for storing data items generated while the program is executed.

The program storing unit 111 includes an Operating System (OS) program 113, a graphic program 114, a user interface program 115, a camera program 116, and at least one application program 117. Herein, the programs included in the program storing unit 111 may be expressed in an instruction set as a set of instructions.

The OS program 113 includes at least one software component for controlling a general system operation. Also, the OS program 113 performs a function for smoothly communicating between a plurality of hardware components and software components.

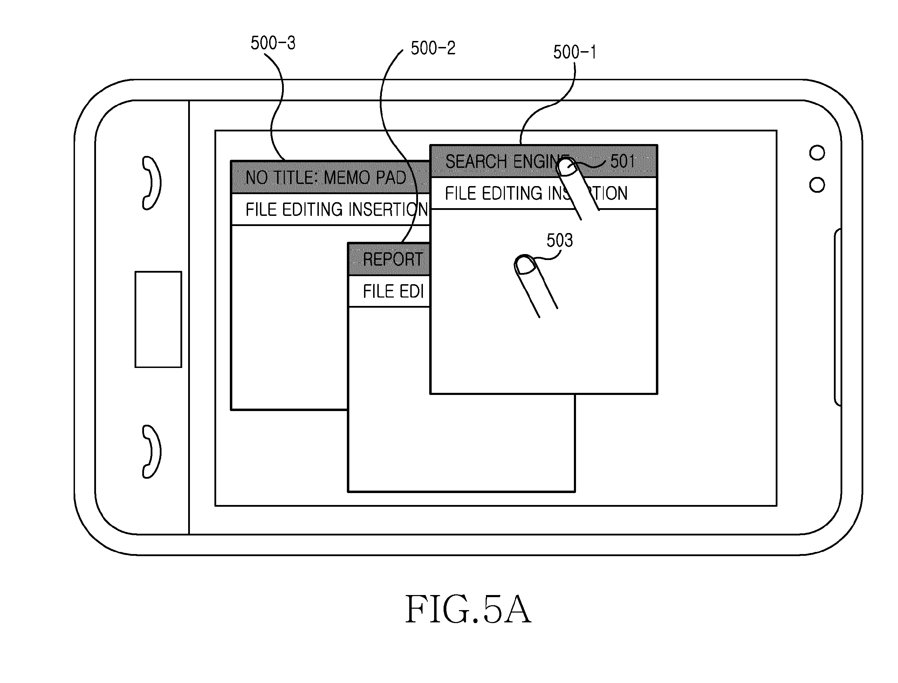

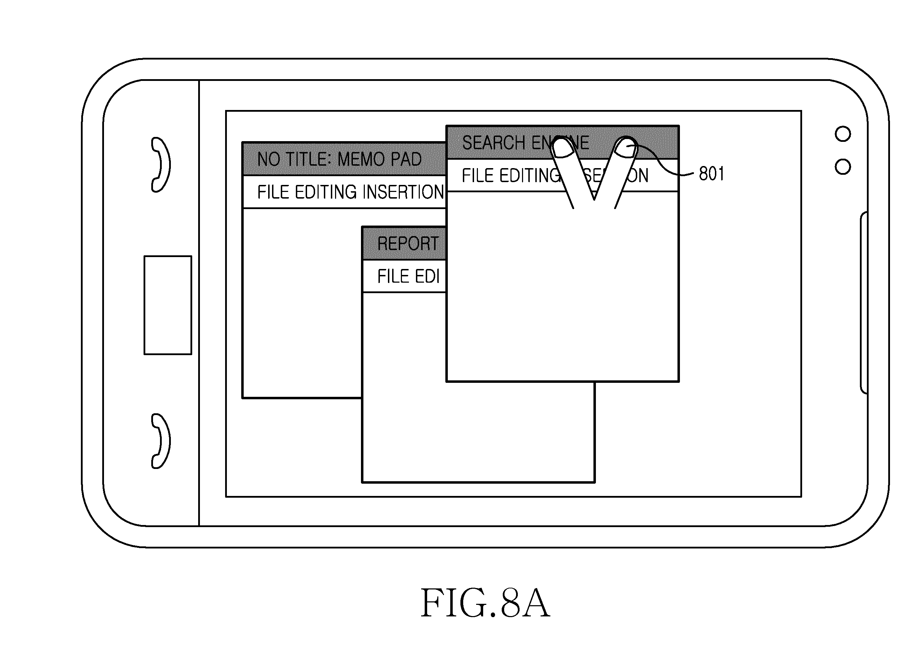

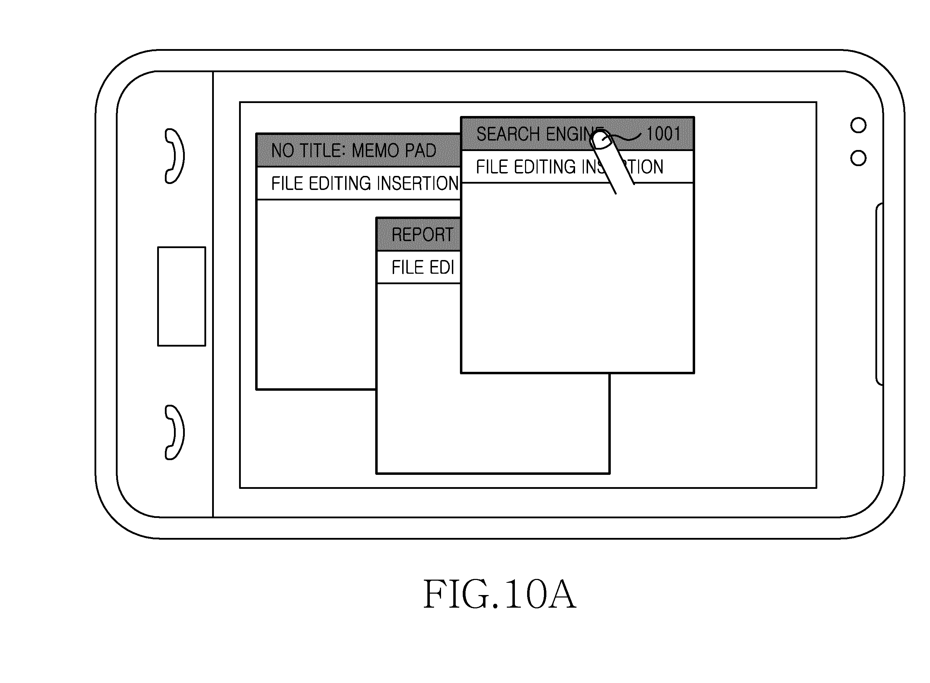

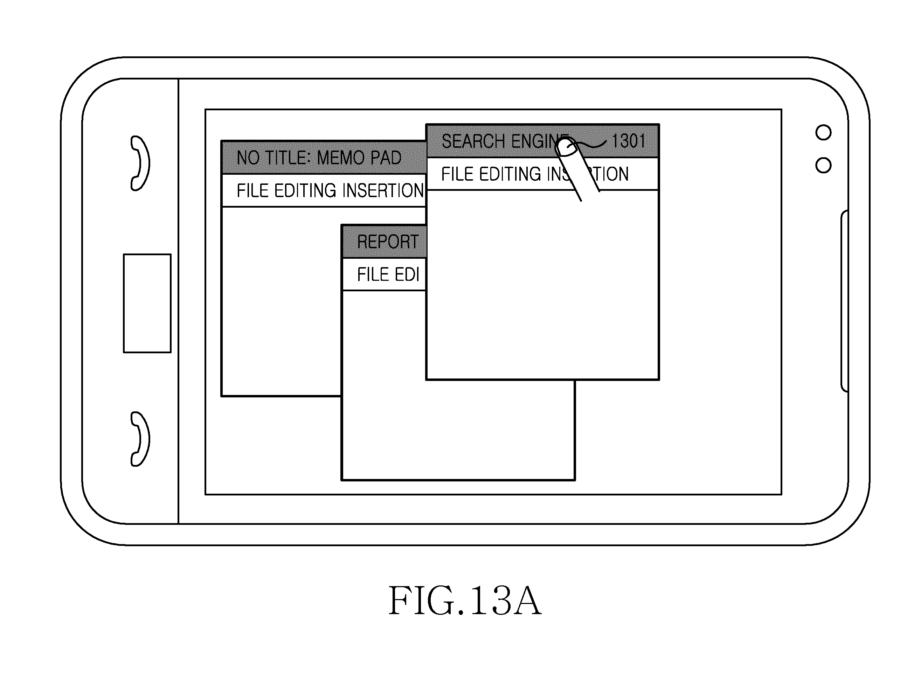

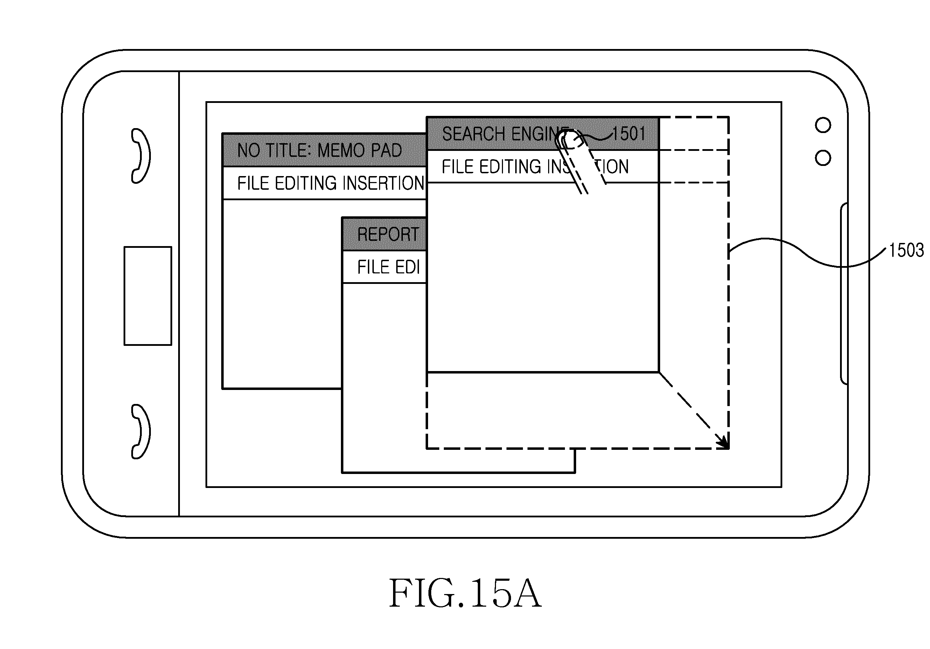

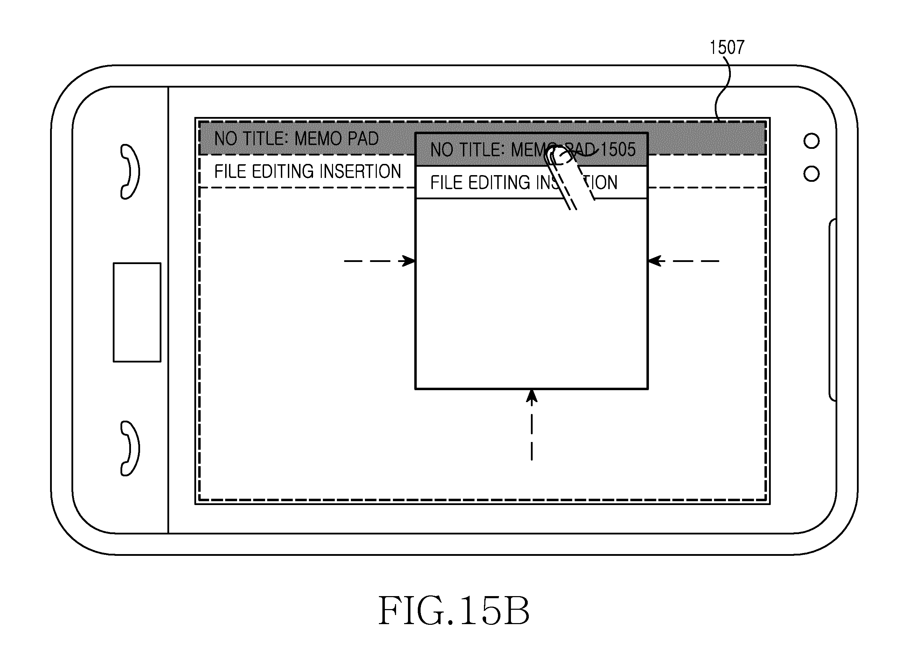

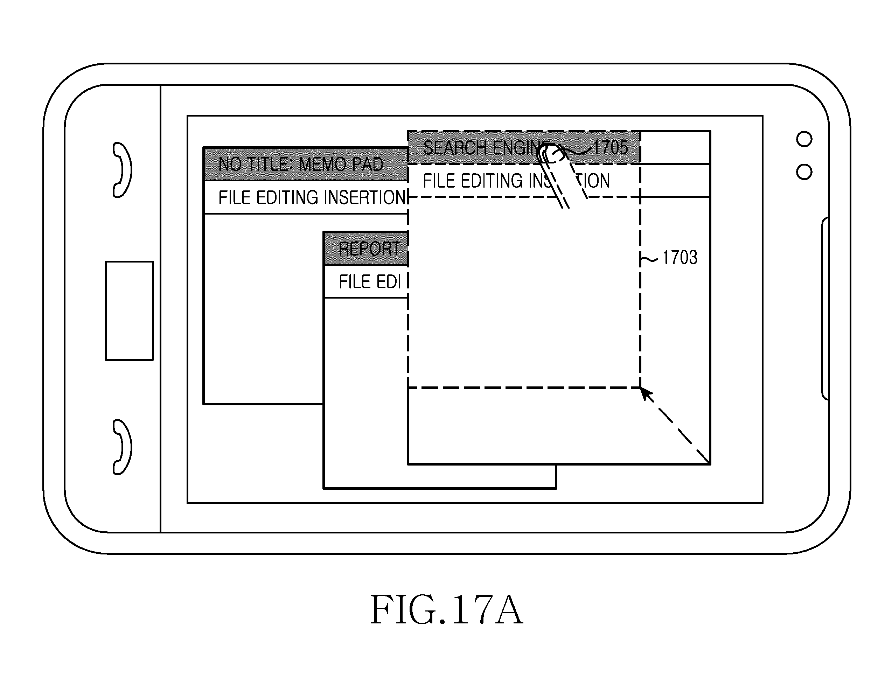

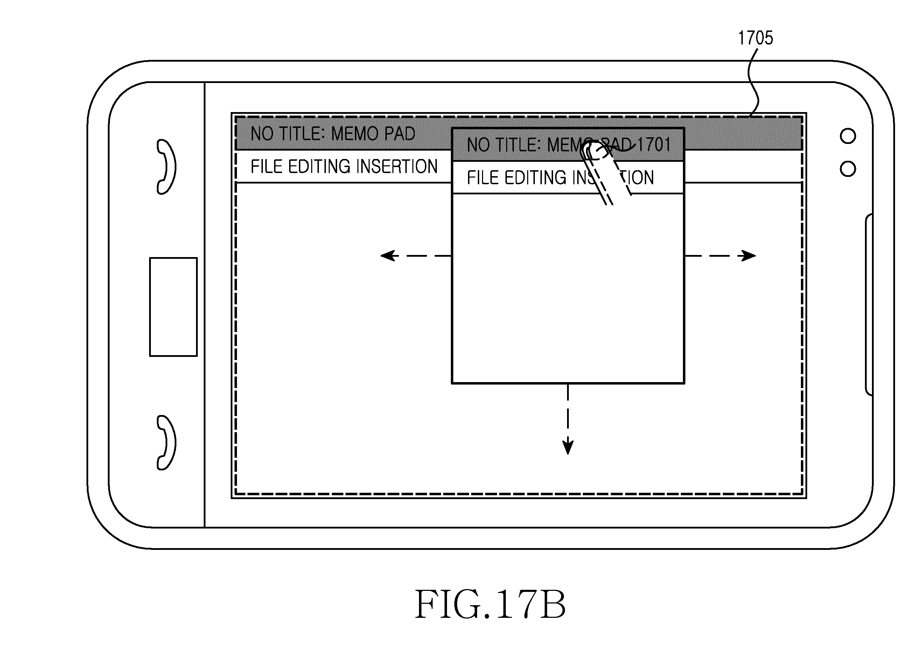

The graphic program 114 includes at least one software component for providing and displaying graphics on the display unit 160. For example, the graphic program 114 may include an instruction for displaying at least one window on the display unit 160 such that a user recognizes user interface screens of an application program which is being executed, according to the user interface program 115. Herein, the graphic program 114 may include an instruction for changing a size of at least one window displayed on the display unit 160 according to control of the user interface program 115. For one example, the graphic program 114 may include, as shown in FIGs. 5A to 5H, an instruction for changing a size of a window in consideration of multi-touch and drag information. For another example, the graphic program 114 may include, as shown in FIGs. 8A to 8D, an instruction for changing a size of a window in consideration of multi-touch information. For another example, the graphic program 114 may include, as shown in FIGs. 10A to 10C, an instruction for changing a size of a window in consideration of touch information according to a reference point. For another example, the graphic program 114 may include, as shown in FIGs. 13A to 13G, an instruction for changing a size of a window in consideration of drag information. For another example, the graphic program 114 may include, as shown in FIGs. 15A and 15B and FIGs. 17A and 17B, an instruction for changing a size of a window in consideration of touch information.

The user interface program 115 includes at least one software component related to a user interface. For example, the user interface program 115 includes an instruction for performing a control operation such that the user uses user interface screens of a plurality of application programs.

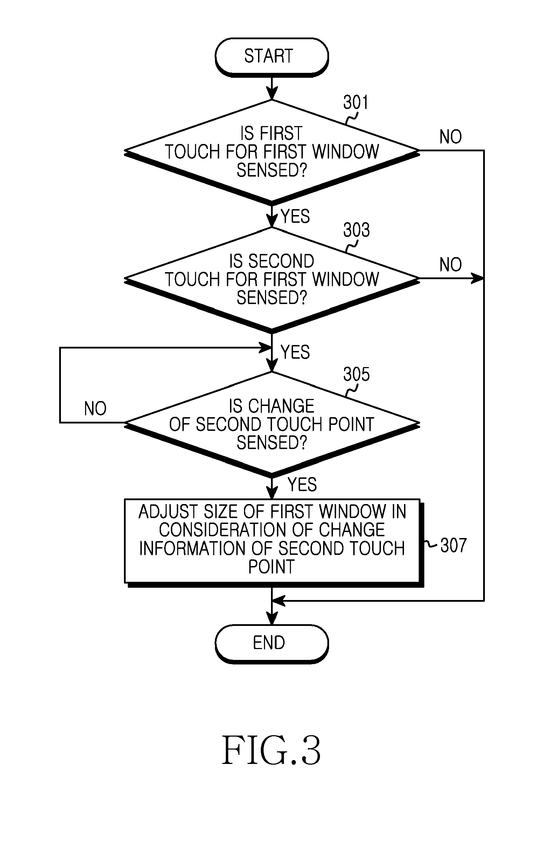

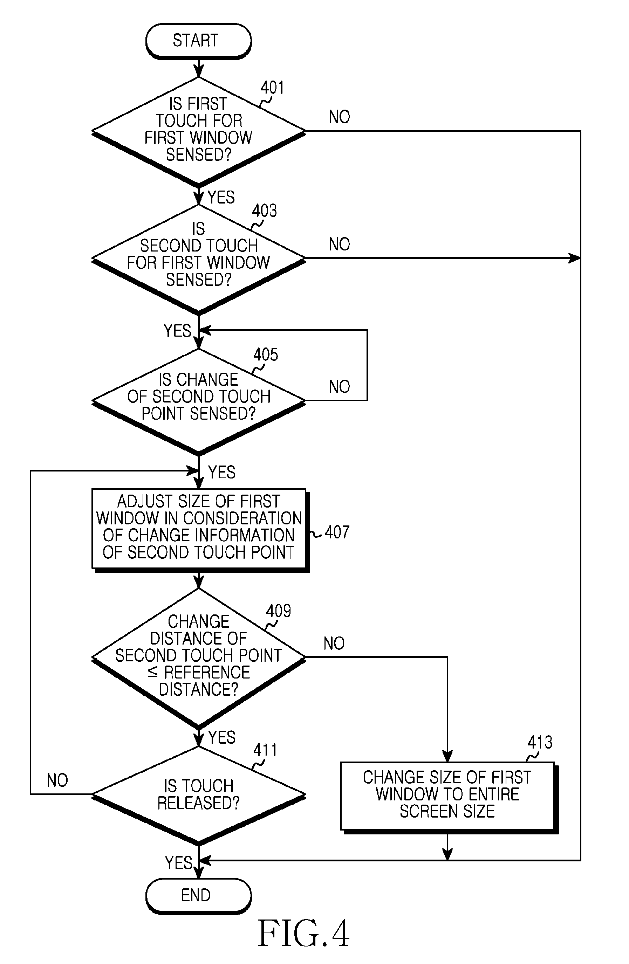

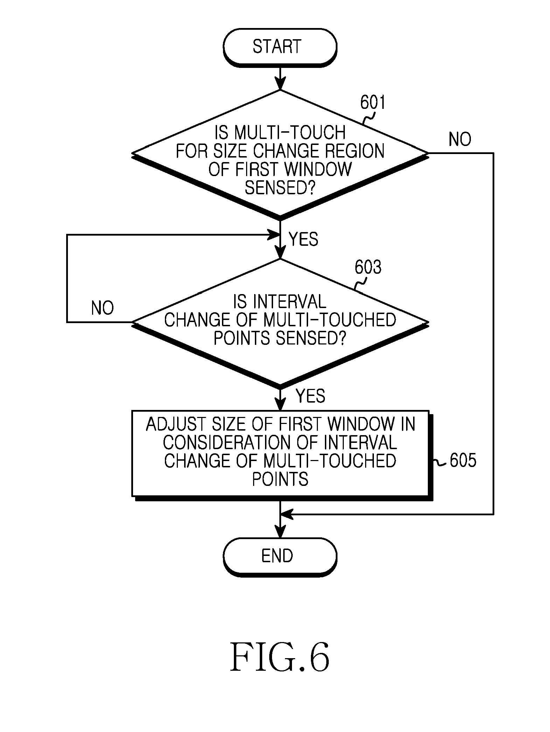

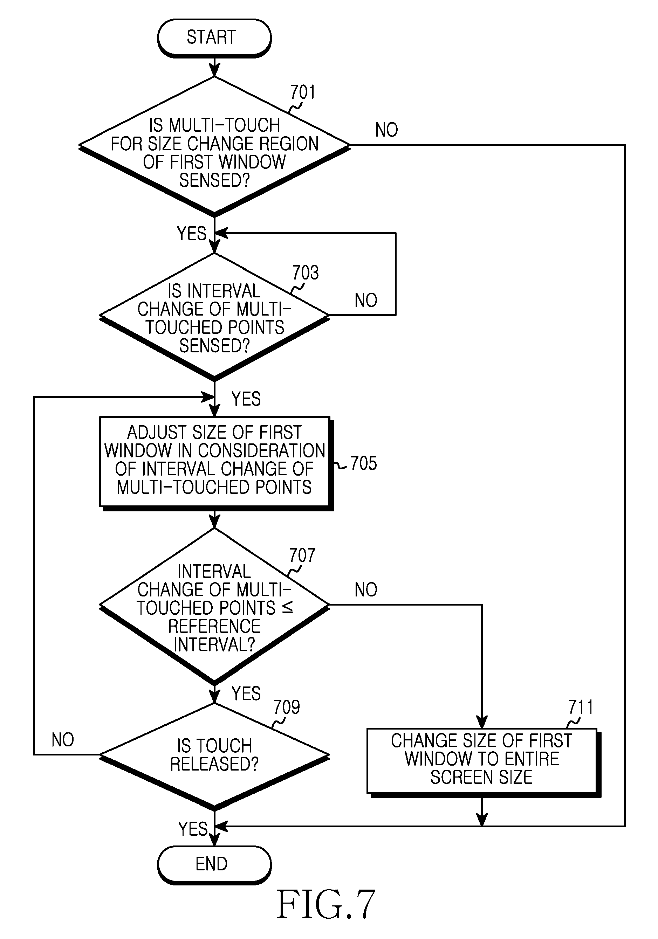

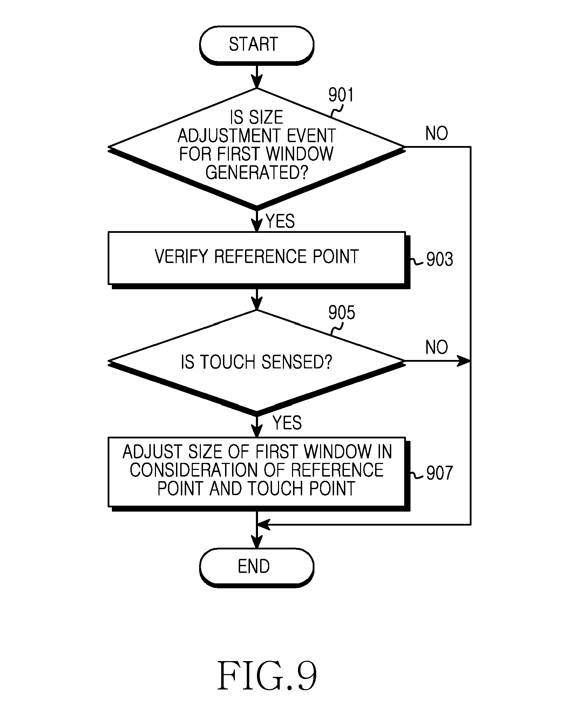

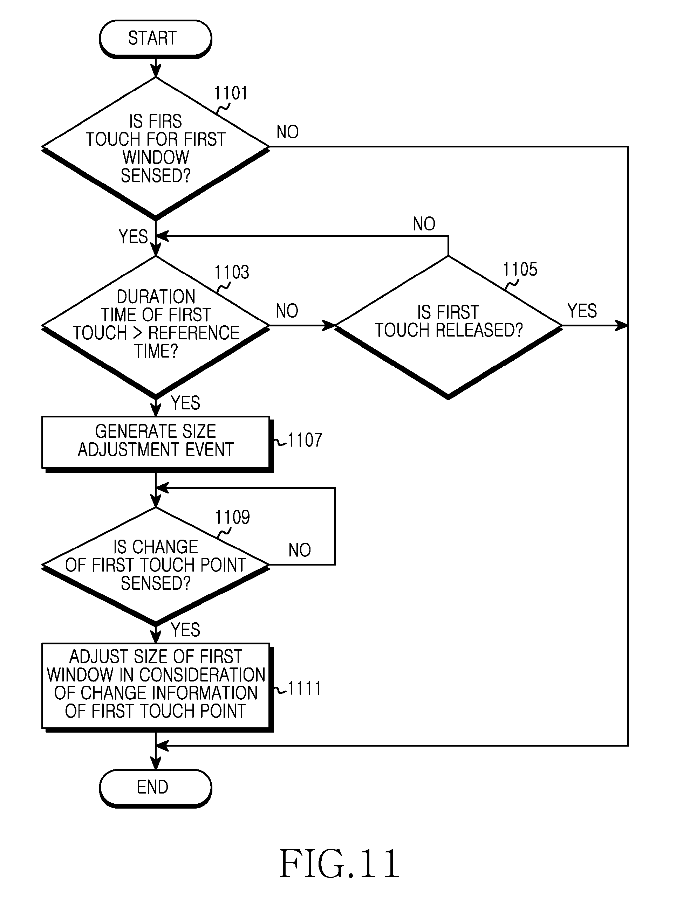

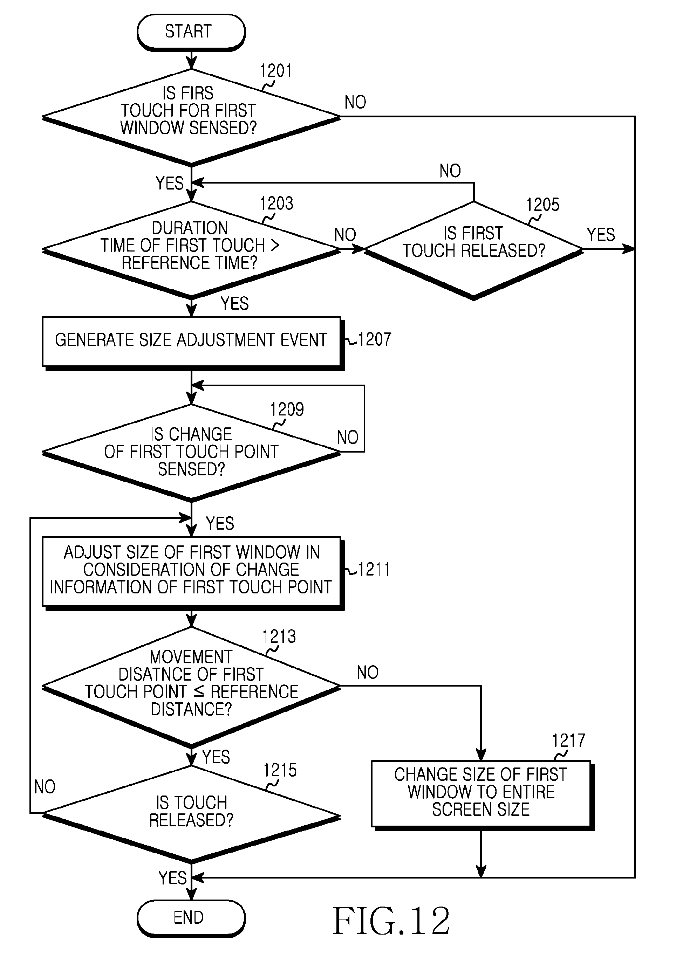

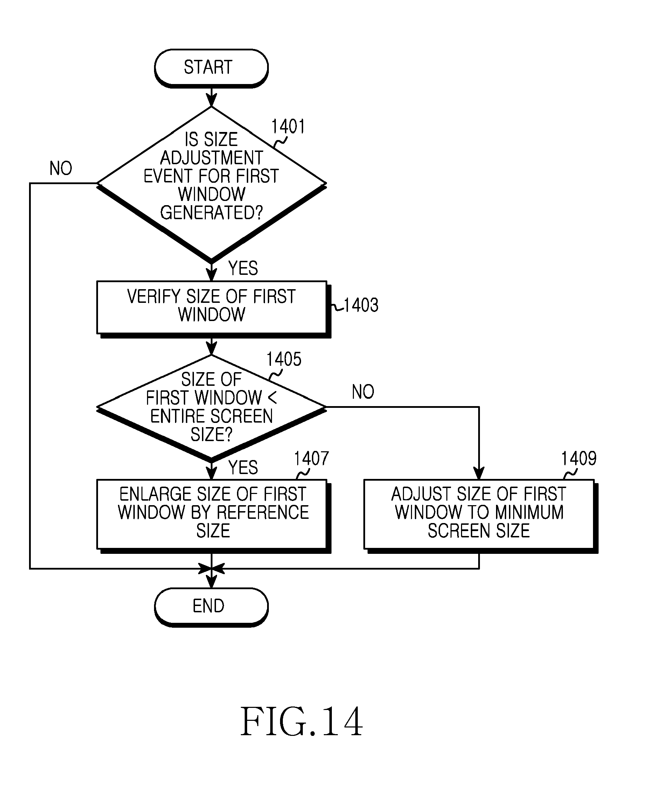

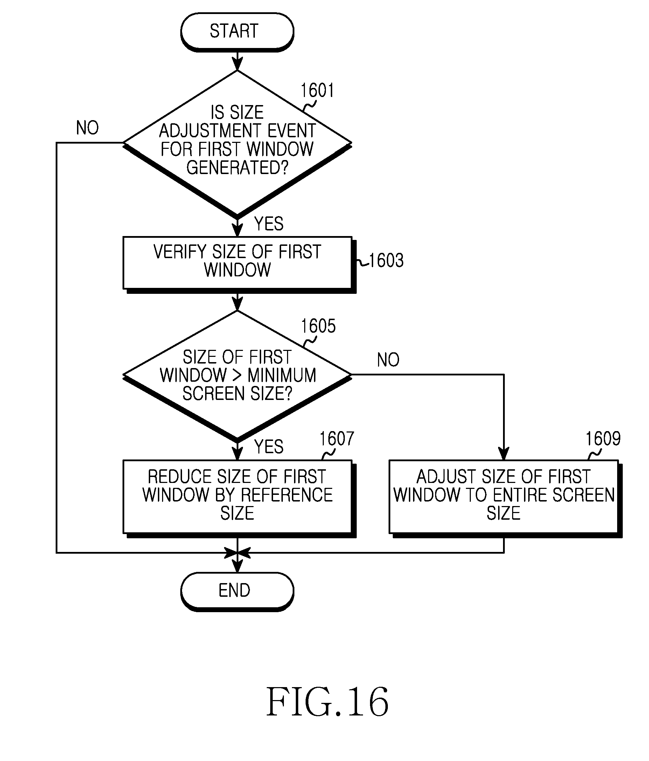

The user interface program 115 includes an instruction for performing a control operation to change a size of a window which is a user interface screen of an application program. For one example, the user interface program 115 includes, as shown in FIGs. 3 and 4, an instruction for performing a control operation to change a size of a window in consideration of change information about any one of touch points by multi-touch. For another example, the user interface program 115 may include, as shown in FIGs. 6 and 7, an instruction for performing a control operation to change a size of a window in consideration of multi-touch information about a size change region included on a window. For another example, the user interface program 115 may include, as shown in FIG. 9, an instruction for performing a control operation to change a size of a window in consideration of successive touch information. For another example, the user interface program 115 may include, as shown in FIGs. 11 and 12, an instruction for performing a control operation to change a size of a window in consideration of change information about a touch point. For another example, the user interface program 115 may include, as shown in FIGs. 14 and 16, an instruction for performing a control operation to change a size of a window by a reference size in consideration of touch information.

The camera program 116 includes cameral-related software components capable of performing camera-related processes and functions.

The application program 117 includes a software component for at least one application program installed in the electronic device 100.

The processor unit 120 includes a memory interface 121, at least one processor 122, and a peripheral interface 123. Herein, the memory interface 121, at least the one processor 122, and the peripheral interface 123 which are included in the processor unit 120 may be integrated in at least one Integrated Circuit (IC) or be separately implemented.

The memory interface 121 controls that a component like the processor 122 or the peripheral interface 123 accesses the memory 110.

The peripheral interface 123 controls connection among an I/O peripheral of the electronic device 100, the processor 122, and the memory interface 121.

The processor 122 provides a variety of services like voice communication and data communication using at least one software program.

Also, the processor 122 executes at least one software program stored in the memory 110 and provides a service corresponding to the corresponding software program.

The audio processing unit 130 provides an audio interface between the user and the electronic device 100 through a speaker 131 and a microphone 132.

The external port 140 includes a connection interface to connect the electronic device 100 to an external electronic device directly or connect it to another electronic device through a network. For example, the external port 140 includes a Universal Serial Bus (USB) port, a High Definition Multimedia Interface (HDMI) port, etc.

The I/O controller 150 provides an interface between I/O devices, such as the display device 160 and the input device 170, and the peripheral interface 123.

The display unit 160 displays state information of the electronic device 100, characters input by the user, moving pictures, still pictures, etc. according to control of the graphic program 114. For example, the display unit 160 displays at least one window according to control of the graphic program 114.

The input device 170 provides an input data generated by selection of the user to the processor unit 120 through the I/O controller 160. Herein, the input device 170 includes a keypad including at least one hardware button, a touch pad for sensing touch information, etc. For example, the input device 170 may provide touch information, such as touch, touch movement, and touch release which is sensed through the touch pad, to the processor 122 through the I/O controller 150.

The camera system 180 may perform a function for photographing a moving picture data and a still picture data.

Although it is not shown in FIG. 1, the electronic device 100 may further include a communication system for performing a communication function for voice communication and data communication. Herein, the communication system may be classified into a plurality of communication sub-modules which support different communication networks. For example, the communication network may be, but is not limited to, any one of a Global System for Mobile communication (GSM) network, an Enhanced Data GSM Environment (EDGE) network, a Code Division Multiple Access (CDMA) network, a W-CDMA network, a Long Term Evolution (LTE) network, an Orthogonal Frequency Division Multiple Access (OFDMA) network, a wireless LAN, a Bluetooth network, a Near Field Communication (NFC) network, etc.

In one embodiment of the present invention described above, the processor 122 of the electronic device 100 may execute the user interface program 115 stored in the program storing unit 111 and may adjust a size of a window displayed on the display unit 160.

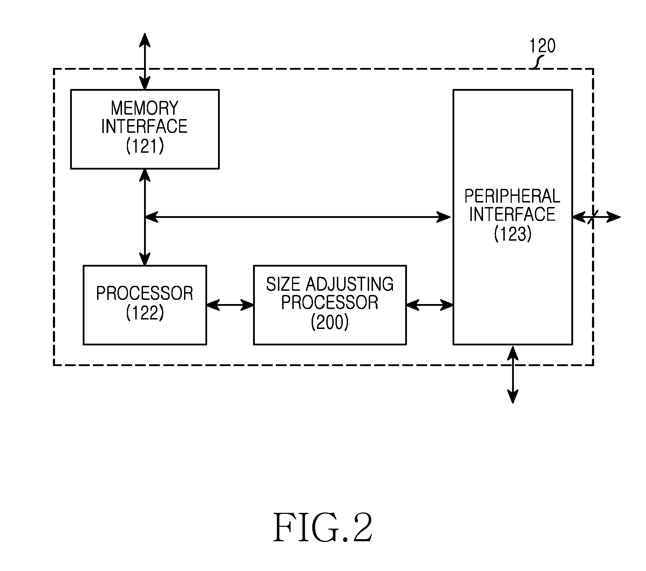

In another embodiment of the present invention, the processor unit 120 of the electronic device 100 may include, as shown in FIG. 2, a separate size adjusting processor 200 for adjusting a size of a window.

FIG. 2 is a block diagram illustrating configuration of a processor unit according to another embodiment of the present invention.

Hereinafter, FIG. 2 illustrates only configuration of a processor unit.

As shown in FIGs. 1 and 2, the processor unit denoted by 120 includes the memory interface 121, at least the one processor 122, the peripheral interface 123, and a size adjusting processor 200. Herein, the memory interface 121, at least the one processor 122, the peripheral interface 123, and the size adjusting processor 200 which are included in the processor unit 120 may be integrated in at least one IC or may be separately implemented.

The memory interface 121 controls that a component such as the processor 12 or the peripheral interface 123 accesses the memory 110.

The peripheral interface 123 controls connection among an I/O peripheral of the electronic device 100, the processor 122, and the memory interface 121.

The processor 122 provides various services such as voice communication and data communication using at least one software program in the electronic device 100. Also, the processor 122 executes at least one software program stored in the memory 110 and provides a service corresponding to the corresponding software program.

The size adjusting processor 200 performs a control operation to change a size of a window which is a user interface screen of an application program. For example, the size adjusting processor 200 performs, as shown in FIGs. 3 and 4, a control operation to change a size of a window in consideration of change information about any one of touch points by a multi-touch. For another example, the size adjusting processor 200 performs, as shown in FIGs. 6 and 7, a control operation to change a size of a window in consideration of multi-touch information about a size change region included on a window. For another example, the size adjusting processor 200 performs, as shown in FIG. 9, a control operation to change a size of a window in consideration of successive touch information. For another example, the size adjusting processor 200 performs, as shown in FIGs. 11 and 12, a control operation to change a size of a window in consideration of change information about a touch point. For another example, the size adjusting processor 200 performs, as shown in FIGs. 14 and 16, a control operation to change a size of a window by a reference size in consideration of touch information.

Hereinafter, a description will be given for a method of adjusting a size of a window in an electronic device having a touch screen in accordance with the exemplary embodiments of the present invention. Hereinafter, touch sensing may include touch point sensing or touch contact sensing.

FIG. 3 is a flowchart illustrating a process of adjusting a size of a window in consideration of multi-touch and drag information according to one embodiment of the present invention. FIGs. 5A to 5H are screens illustrating the operation steps of flow chart shown in FIG. 3.

Referring to FIG. 3 and FIGs. 5A to 5H, the electronic device determines whether a first touch for a first window among a plurality of windows displayed on a display unit is sensed in step 301. For example, the electronic device displays, as shown in FIG. 5A, a first window 500-1 which is a user interface screen for a first application program, a second window 500-2 which is a user interface screen for a second application program, and a third window 500-3 which is a user interface screen for a third application program on the display unit. Herein, the electronic device determines, as shown in FIG. 5A, whether a first touch 501 for the first window 500-1 is sensed. The first touch point may be anywhere within the window 500-1.

When the first touch for the first window is not sensed, the electronic device ends the algorithm of FIG. 3.

On the other hand, when the first touch for the first window is sensed, the electronic device proceeds to step 303 and determines whether a second touch for the first window is sensed in a state where the first touch is held. For example, the electronic device determines, as shown in FIG. 5A, whether a second touch 503 for the first window 500-1 is sensed in a state where the first touch 501 is held.

When the second touch for the first window is not sensed until a reference time elapses from a time point when the first touch is sensed, the electronic device recognizes that a user does not adjust a size of the first window. Accordingly, the electronic device ends the algorithm of FIG. 3.

On the other hand, when the second touch for the first window is sensed, the electronic device proceeds to step 305 and determines whether any action after the second touch point occurs in a state where the first touch is held. For one example, the electronic device determines whether a drag by the second touch is generated in a state where the first touch is held. For another example, the electronic device determines whether the second touch is released in the state where the first touch is held and whether a third touch is sensed. Herein, the electronic device may recognize a third touch point as a changed point of the second touch.

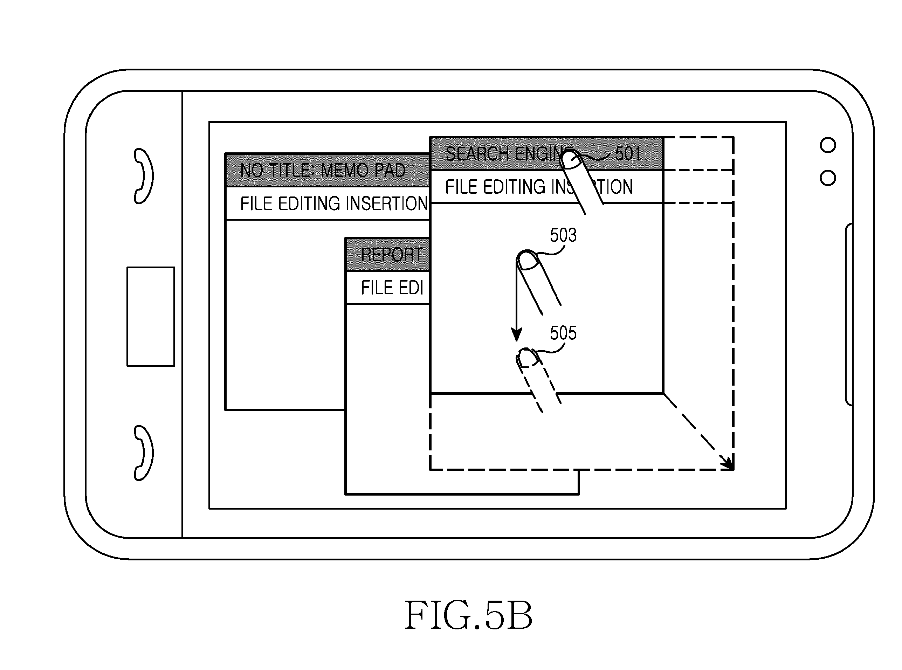

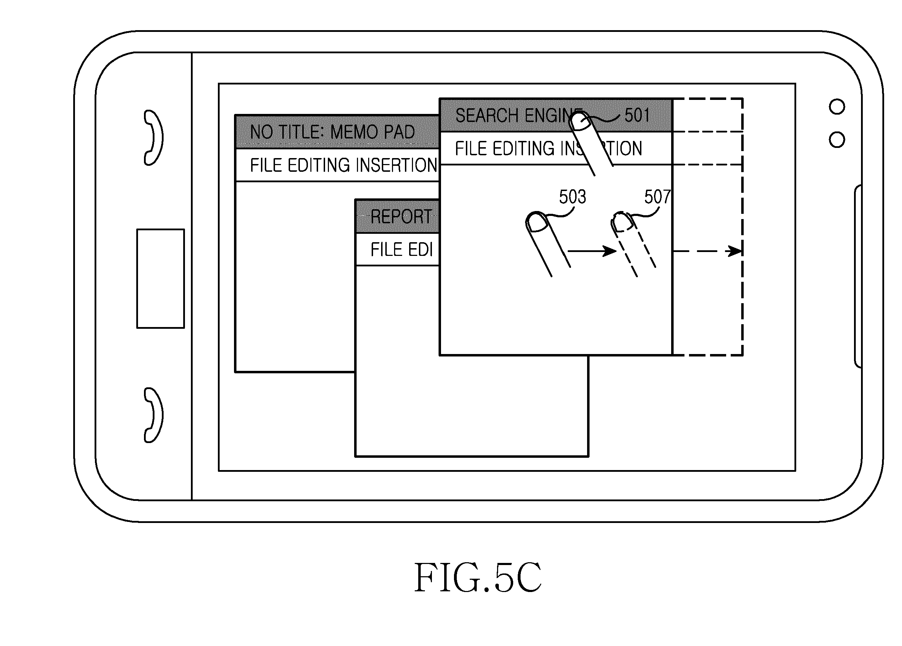

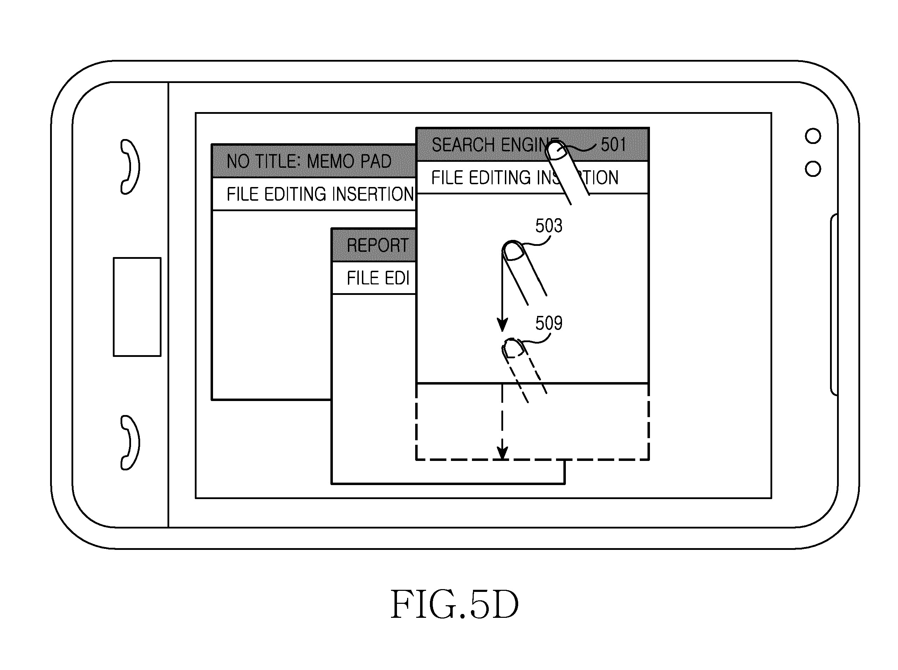

When the second touch point is changed in the state where the first touch is held, the electronic device proceeds to step 307 and adjusts a size of the first window according to the change in the second touch point. Herein, the change in the second touch point includes a distance dragged after the second touch on the screen and a direction change after the second touch on the screen. For example, as shown in FIG. 5B, when a first touch point is distant from the second touch point, the electronic device enlarges the entire size of the first window 500-1 at a certain rate according to a distance change 505 of the second touch point. For another example, as shown in FIG. 5C, when the second touch point is dragged to the right, the electronic device may enlarge a right side of the first window 500-1. Herein, the electronic device may determine an enlargement rate in response to a distance change 507 of the second touch point. For another example, as shown in FIG. 5D, when the second touch point is dragged down, the electronic device may enlarge a lower size of the first window 500-1. Herein, the electronic device may determine an enlargement rate in response to a distance change 509 of the second touch point.

The electronic device ends the algorithm of FIG. 3.

As explained above, in one embodiment of the present invention, the electronic device may enlarge a size of the first window 500-1 in response to a change of the second touch point.

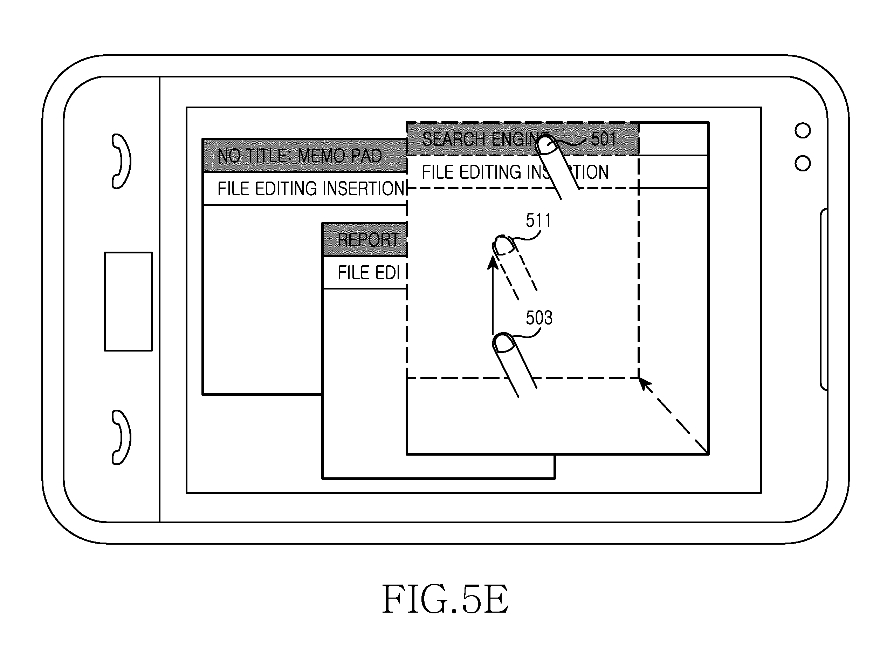

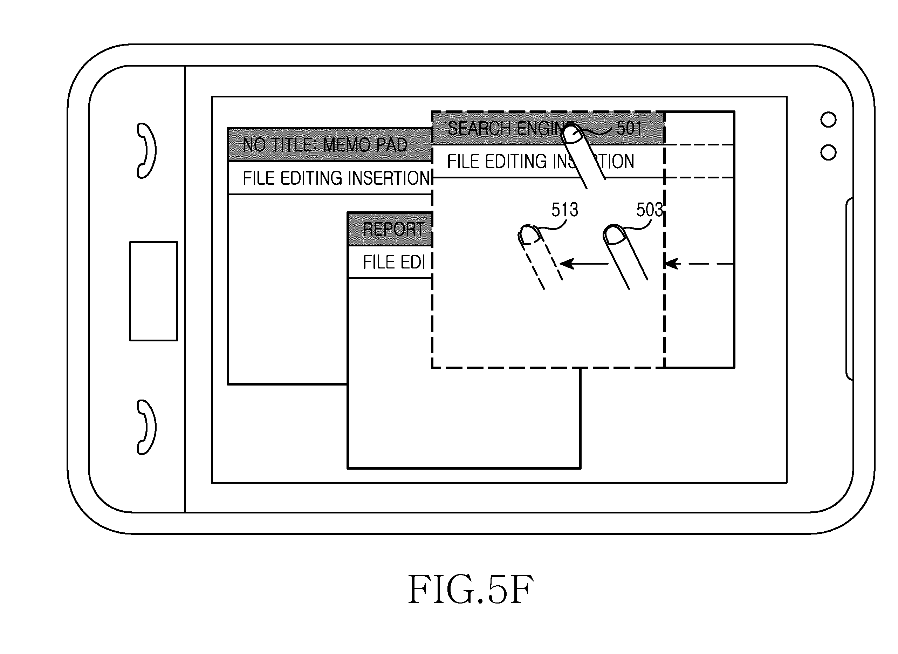

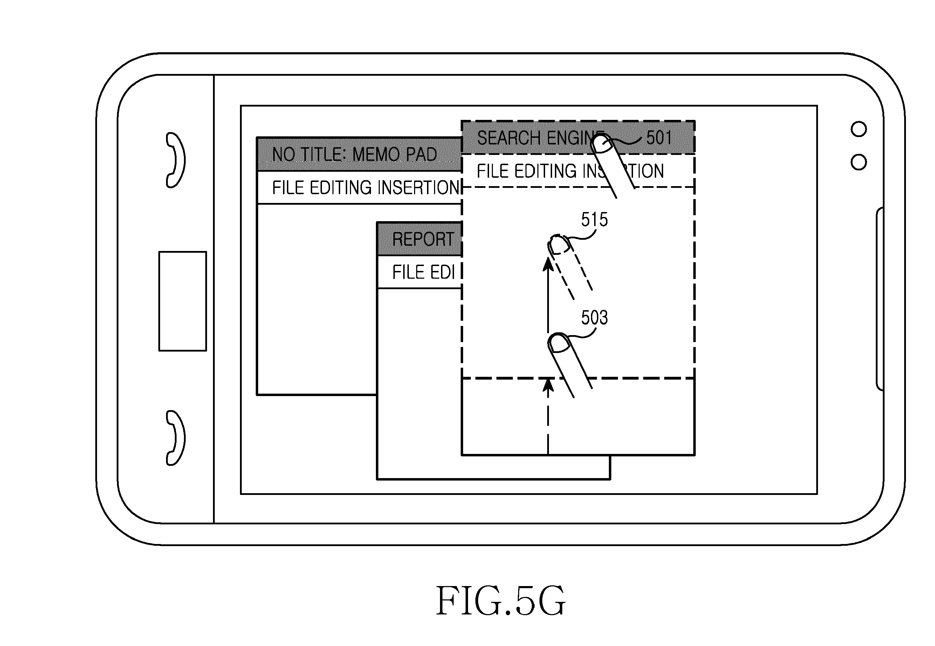

In another embodiment of the present invention, the electronic device may reduce a size of the first window 500-1 in consideration of change information of the second touch point. For one example, as shown in FIG. 5E, when the first touch point is close to the second touch point according to a change of the second touch point, the electronic device reduces the entire size of the first window 500-1 at a certain rate in response to a distance change 511 of the second touch point. As another example, as shown in FIG. 5F, when the second touch point is dragged to the left, the electronic device may reduce a right size of the first window 500-1. Herein, the electronic device may determine a reduction rate in response to a distance change 513 of the second touch point. For another example, as shown in FIG. 5G, when the second touch point is dragged upwardly, the electronic device may reduce a lower size of the first window 500-1. Herein, the electronic device may determine a reduction rate in response to a distance change 515 of the second touch point.

As described above, the electronic device adjusts a size of the first window 500-1 according to change in the second touch point sensed in the state where the first touch for the first window 500-1 is held.

FIG. 4 is a flowchart illustrating a process of adjusting a size of a window in consideration of multi-touch and drag information detected on a screen according to another embodiment of the present invention.

Referring to FIG. 4 and FIGs. 5A to 5H, an electronic device determines whether a first touch for a first window among a plurality of windows displayed on a display unit is sensed in step 401 as explained previously connection with FIG.5A.

When the first touch for the first window is not sensed, the electronic device ends the algorithm of FIG. 4.

On the other hand, when the first touch for the first window is sensed, the electronic device proceeds to step 403 and determines whether a second touch for the first window is sensed in a state where the first touch is held as explained previously connection with FIG.5A.

When the second touch for the first window is not sensed until a reference time elapses from a time point when the first touch is sensed, the electronic device recognizes that a user does not adjust a size of the first window. Accordingly, the electronic device ends the algorithm of FIG. 4. Herein, the reference time is determined in consideration of an elapsed time from the time point when the first touch is sensed.

On the other hand, when the second touch for the first window is sensed, the electronic device proceeds to step 405 and determines whether a second touch point is changed in the state where the first touch is held. For one example, the electronic device determines whether a drag by the second touch is generated in a state where the first touch is held. For another example, the electronic device determines whether the second touch is released in the state where the first touch is held and whether a third touch is sensed. Herein, the electronic device may recognize a third touch point as a changed point of the second touch.

When the second touch point is changed in the state where the first touch is held, the electronic device proceeds to step 407 and adjusts a size of the first window according to the change information by the second touch point. For example, the electronic device adjusts, as shown in FIGs. 5B to 5G, a size of the first window according to the change (movement) by the second touch..

Thereafter, if the second touch point is continuously changed, the electronic device proceeds to step 409 and determines whether the change of the second touch point is less than or equal to a reference distance.

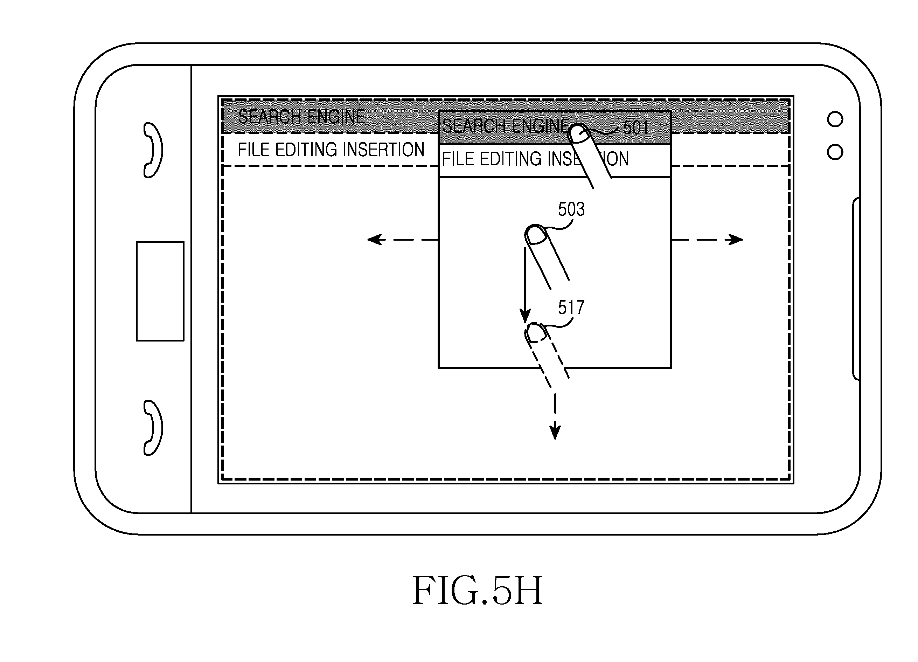

When the change of the second touch point is greater than the reference distance, the electronic device proceeds to step 413 and changes a size of the first window to the entire screen size. For example, as shown in FIG. 5H, when a change distance 517 of the second touch point 503 is greater than the reference distance, the electronic device enlarges a size of the first window 500-1 to the entire screen size. Accordingly, when a size adjustment event according to touch information is generated on the first window 500-1 of the entire screen size, the electronic device enlarges/reduces contents displayed on the first window 500-1 accordingly.

On the other hand, when the change of the second touch point is less than or equal to the reference distance, the electronic device proceeds to step 411 and determines whether at least one of the first touch and the second touch is released.

When the first touch and the second touch are not released, the electronic device proceeds to step 407 and adjusts the size of the first window according to the change by the second touch.

On the other hand, when at least one of the first touch and the second touch is released, the electronic device ends the algorithm of FIG. 4.

In one embodiment of the present invention described above, the electronic device senses the first touch and the second touch and adjusts the size of the first window according to the change of the second touch point. Herein, only when the first touch for a size adjustment region which is set on the first window is sensed, the electronic device may also adjust the size of the first window in consideration of the change information of the second touch point. Herein, the size adjustment region is a partial region which is set on the first window to sense a size adjustment event of the first window, and may include a title bar, a menu bar, etc.

If the electronic device adjusts the size of the first window only when sensing the first touch for the size adjustment region, it may enlarge/reduce contents displayed on the first window in consideration of touch information about a region execept for the size adjustment region.

FIG. 6 is a flowchart illustrating a process of adjusting a size of a window in consideration of multi-touch according to another embodiment of the present invention. FIGs. 8A to 8D are screens illustrating the operation process of FIG. 6.

Referring to FIG. 6 and FIGs. 8A to 8D, an electronic device determines whether a multi-touch for a size adjustment region of a first window is sensed in step 601. For example, as shown in FIG. 8A, the electronic device displays a first window which is a user interface screen for a first application program, a second window which is a user interface screen for a second application program, and a third window which is a user interface screen for a third application program on a display unit. Herein, the electronic device determines, as shown in FIG. 8A, whether a multi-touch 801 for the size adjustment region of the first window is sensed. Herein, the size adjustment region is a partial region which is set on the first window to sense a size adjustment event, and may include a title bar, a menu bar, etc.

When the multi-touch for the size adjustment region of the first window is not sensed, the electronic device ends the algorithm of FIG. 6.

On the other hand, when the multi-touch for the size adjustment region of the first window is sensed, the electronic device proceeds to step 603 and determines whether an interval change between multi-touched points is sensed.

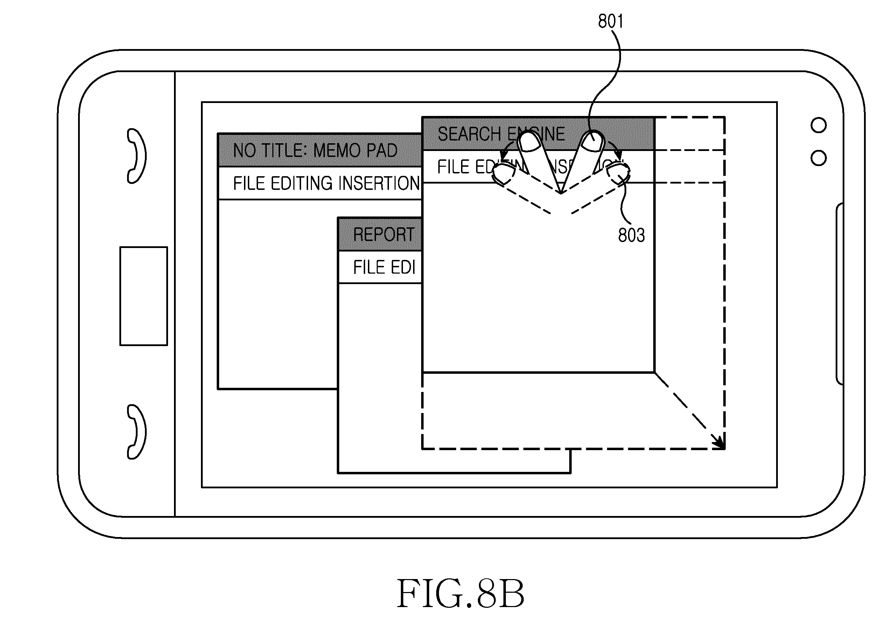

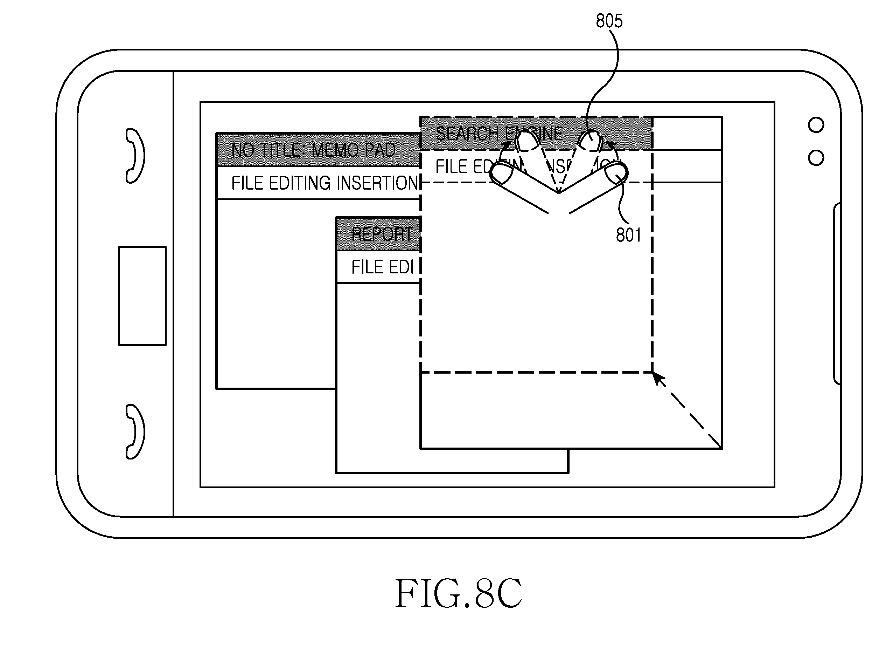

When the interval change of the multi-touched points is sensed, the electronic device proceeds to step 605 and adjusts a size of the first window in consideration of the interval change of the multi-touched points. For an example, as shown in FIG. 8B, when an interval of the multi-touched points 801 is broadened, the electronic device enlarges the entire size of the first window at a certain rate in response to an interval change 803 of the multi-touched points 801. For another example, as shown in FIG. 8C, when an interval of the multi-touched points 801 is narrowed, the electronic device may reduce the entire size of the first window at a certain rate in response to an interval change 805 of the multi-touched points 801.

The electronic device ends the algorithm of FIG. 6.

FIG. 7 is a flowchart illustrating a process of adjusting a size of a window in consideration of multi-touch according to another embodiment of the present invention.

Referring to FIG. 7 and FIGs. 8A to 8D, an electronic device determines whether a multi-touch for a size adjustment region of a first window is sensed in step 701, as explained previously connection with FIG. 8A.

When the multi-touch for the size adjustment region of the first window is not sensed, the electronic device ends the algorithm of FIG. 7.

On the other hand, when the multi-touch for the size adjustment region of the first window is sensed, the electronic device proceeds to step 703 and determines whether an interval change between multi-touched points is sensed.

When the interval change of the multi-touched points is sensed, the electronic device proceeds to step 705 and adjusts a size of the first window in consideration of the interval change of the multi-touched points. For an example, as shown in FIG. 8B, when an interval of the multi-touched points 801 is broadened, the electronic device enlarges the entire size of the first window at a certain rate in response to an interval change 803 of the multi-touched points 801. For another example, as shown in FIG. 8C, when an interval of the multi-touched points 801 is narrowed, the electronic device may reduce the entire size of the first window at a certain rate in response to an interval change 805 of the multi-touched points 801.

Thereafter, if the interval of the multi-touched points is continuously changed, the electronic device proceeds to step 707 and determines whether the interval of the multi-touched points is less than or equal to a reference interval. Herein, the electronic device may adjust the size of the first window continuously in consideration of the interval change of the multi-touched points.

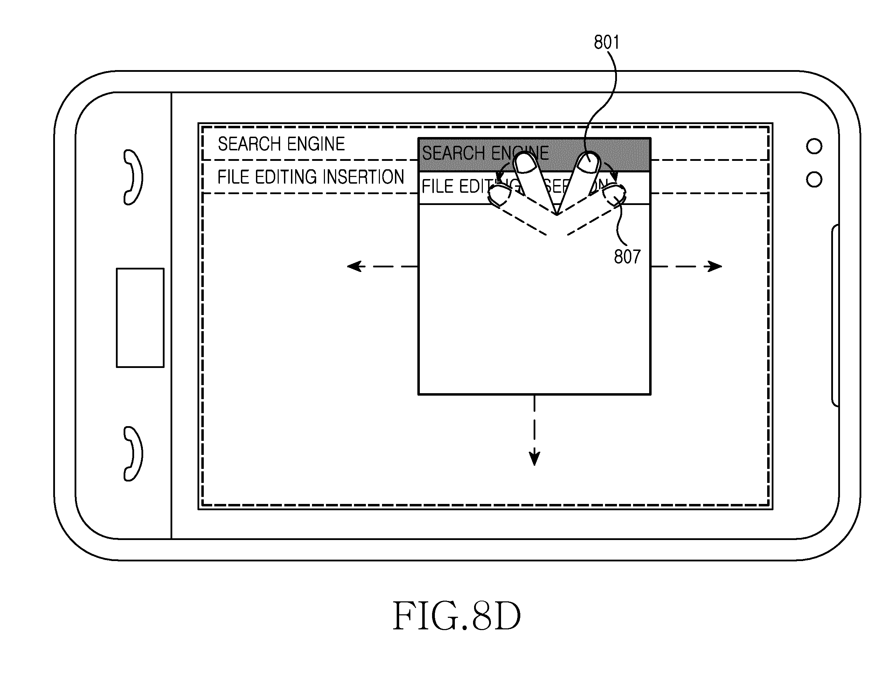

When the interval of the multi-touched points is greater than the reference interval, the electronic device proceeds to step 711 and changes the size of the first window to the entire screen size. For example, when the interval 807 of the multi-touched points 801 is greater than the reference interval, the electronic device enlarges, as shown in FIG. 8D, the size of the first window to spread over the entire screen. Accordingly, when a size adjustment event according to touch information is generated on the first window of the entire screen size, the electronic device may enlarge/reduce contents displayed on the first window accordingly.

On the other hand, when the interval of the multi-touched points is less than or equal to the reference interval, the electronic device proceeds to step 709 and determines whether at least one touch on the multi-touch is released.

When the multi-touch is not released, the electronic device proceeds to step 705 and adjusts the size of the first window in consideration of the interval change of the multi-touched points.

On the other hand, when at least the one touch on the multi-touch is released, the electronic device ends the algorithm of FIG. 7.

FIG. 9 is a flowchart illustrating a process of adjusting a size of a window in response to a reference point and a touch points according to another embodiment of the present invention. FIGs. 10A to 10C are screens illustrating the operation process of FIG. 9.

Referring to FIG. 9 and FIGs. 10A to 10C, an electronic device determines whether a size adjustment event for a first window is generated in step 901. For an example, the electronic device determines, as shown in FIG. 10A, whether a touch in the first window is held longer than a reference time. For another example, the electronic device may determine whether a touch for a size adjustment region of the first window is held longer than a reference time. Herein, the size adjustment region is a partial region which is set on the first window to sense a size adjustment event, and may include a title bar, a menu bar, etc. Alternatively, the electronic device may determine whether selection of a size adjustment change icon displayed on a display unit is sensed.

When the size adjustment event for the first window is not generated, the electronic device ends the algorithm of FIG. 9.

On the other hand, when the size adjustment event for the first window is sensed, the electronic device proceeds to step 903 and determines a reference point for adjusting a size of the first window. For example, the electronic device identifies predetermined reference point. For another example, the electronic device determines reference point according touch on the first window. At this time, the electronic device may display the size adjustment event generation information on the display unit.

The electronic device proceeds to step 905 and determines whether a touch for the display unit is sensed.

When a touch is not sensed, the electronic device recognizes that a user does not wish to adjust a size of the first window. Accordingly, the electronic device ends the algorithm of FIG. 9.

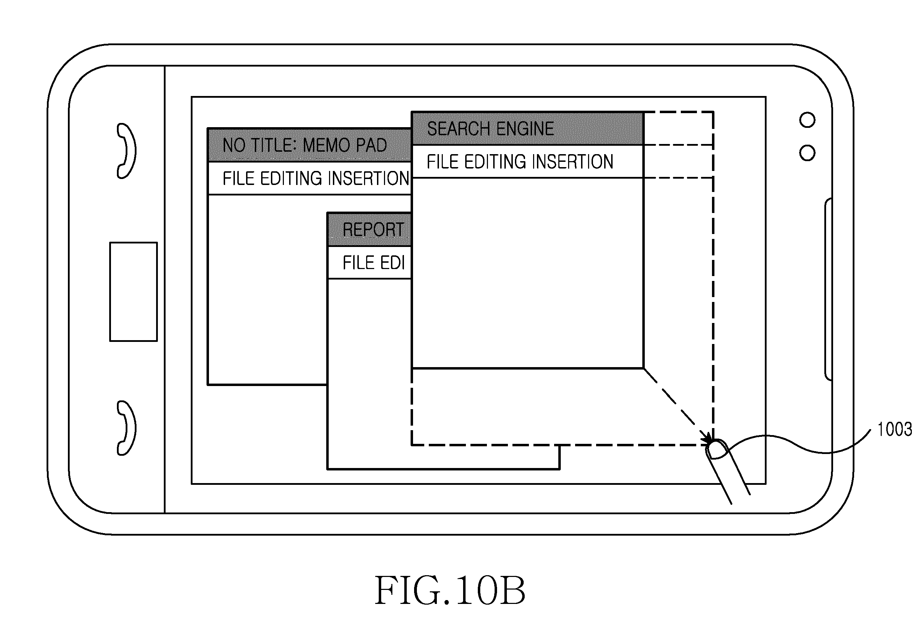

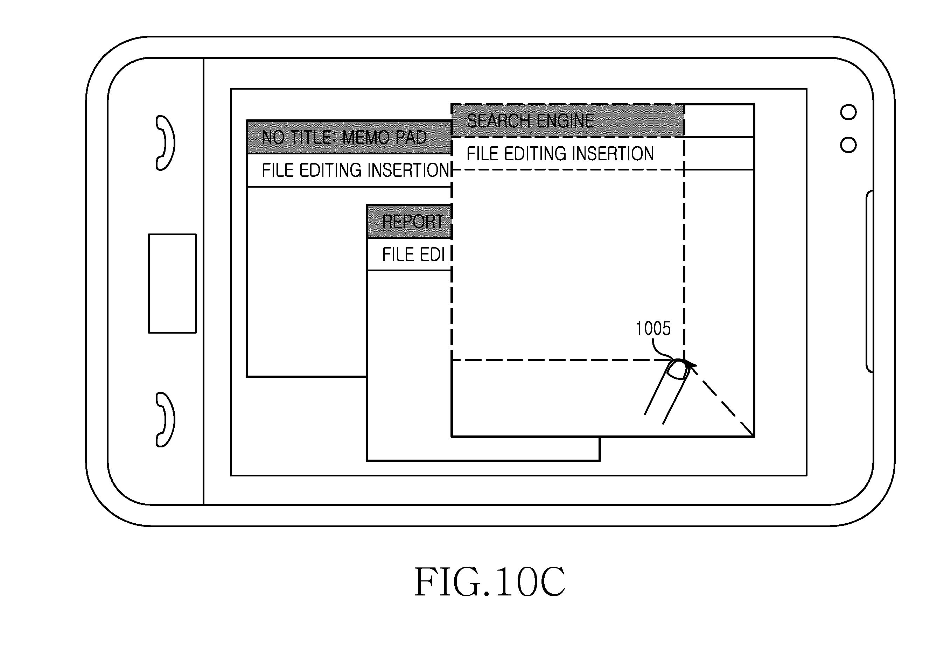

On the other hand, when the touch for the display unit is sensed, the electronic device proceeds to step 907 and adjusts a size of the first window in response to the reference point and a touch point. For example, as shown in FIG. 10B, when a reference point 1001 is a title bar, the electronic device enlarges a size of the first window to a touch point 1003. For another example, as shown in FIG. 10C, when the reference point 1001 is the title bar, the electronic device may reduce a size of the first window to a touch point 1005.

The electronic device ends the algorithm of FIG. 9.

FIG. 11 is a flowchart illustrating a process of adjusting a size of a window in consideration of drag information according to one embodiment of the present invention. FIGs. 13A to 13G are screens illustrating the operation process of FIG. 11.

Referring to FIG. 11 and FIGs. 13A to 13G, an electronic device determines whether a first touch for a first window is sensed in step 1101. For example, the electronic device displays, as shown in FIG. 13A, a first window which is a user interface screen for a first application program, a second window which is a user interface screen for a second application program, and a third window which is a user interface screen for a third application program on a display unit. Herein, the electronic device determines, as shown in FIG. 13A, whether a first touch 1301 for the first window is sensed.

When the first touch for the first window is not sensed, the electronic device ends the algorithm of FIG. 11.

On the other hand, when the first touch for the first window is sensed, the electronic device proceeds to step 1103 and determines whether a duration time of the first touch exceeds a reference time to determine whether a size change event is generated.

When the duration time of the first touch is less than or equal to the reference time, the electronic device proceeds to step 1105 and determines whether the first touch is released. When the first touch is released, the electronic device recognizes that the size change event is not generated. Accordingly, the electronic device ends the algorithm of FIG. 11.

On the other hand, when the first touch is not released, the electronic device proceeds to step 1103 and determines whether the duration time of the first touch exceeds the reference time. If so, the electronic device proceeds to step 1107 and generates a size adjustment event for the first window Herein, the electronic device may display the size adjustment event generation information on the display unit.

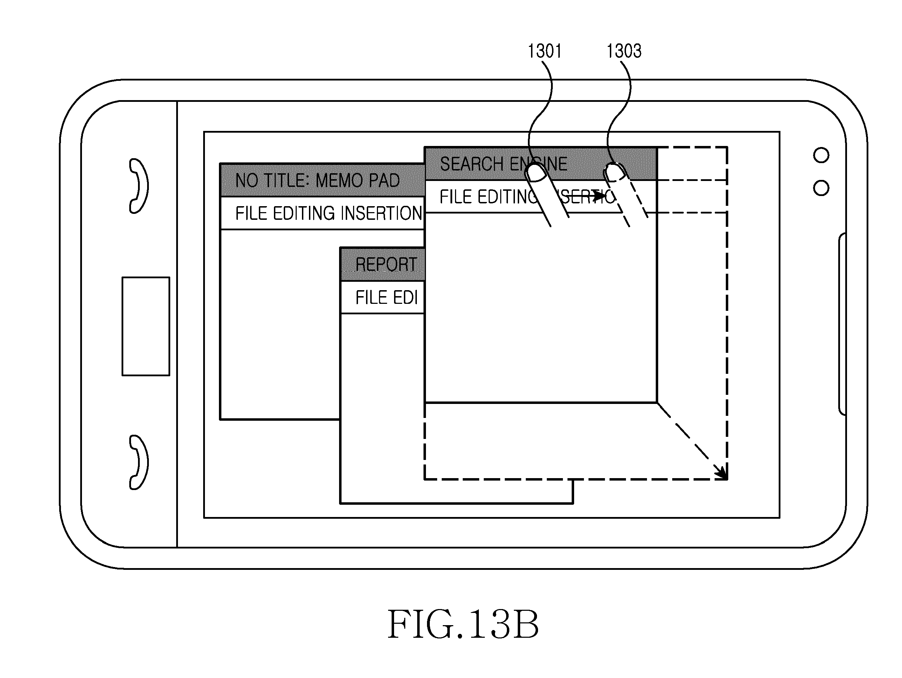

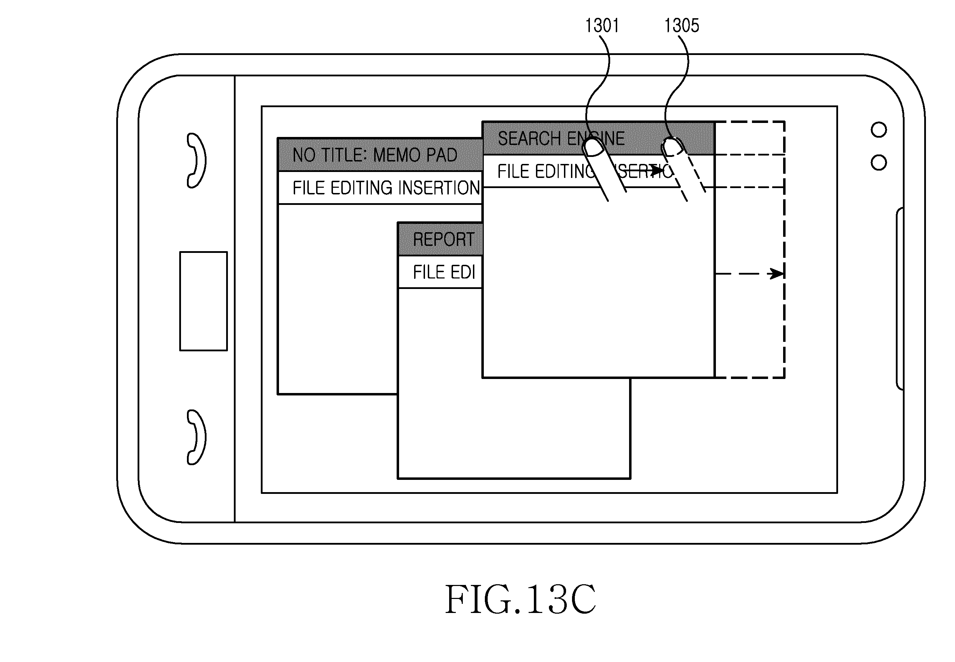

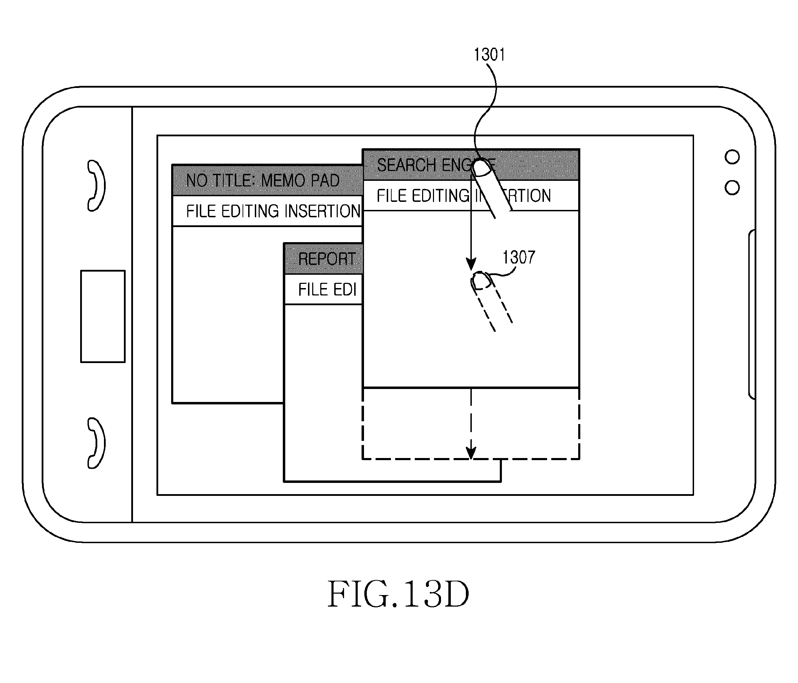

The electronic device proceeds to step 1109 and determines whether a first touch point is changed. For example, the electronic device determines whether a drag by the first touch is generated. If so, the electronic device proceeds to step 1111 and adjusts a size of the first window according to the change by the first touch. Herein, the change by the first touch point includes a distance dragged after the first touch and a direction change of the first touch. For an example, the electronic device may enlarge, as shown in FIG. 13B, the entire size of the first window at a certain rate in response to a distance change 1303 of a first touch point 1301. For another example, as shown in FIG. 13C, when the first touch point 1301 is dragged to the right, the electronic device may enlarge a right side of the first window. Herein, the electronic device may determine an enlargement rate in consideration of the distance change 1305 of the first touch point 1301. For another example, as shown in FIG. 13D, when the first touch point 1301 is dragged down, the electronic device may enlarge a lower side of the first window. Herein, the electronic device may determine an enlargement rate in consideration of a distance change 1307 of the first touch point 1301 .

The electronic device ends the algorithm of FIG. 11.

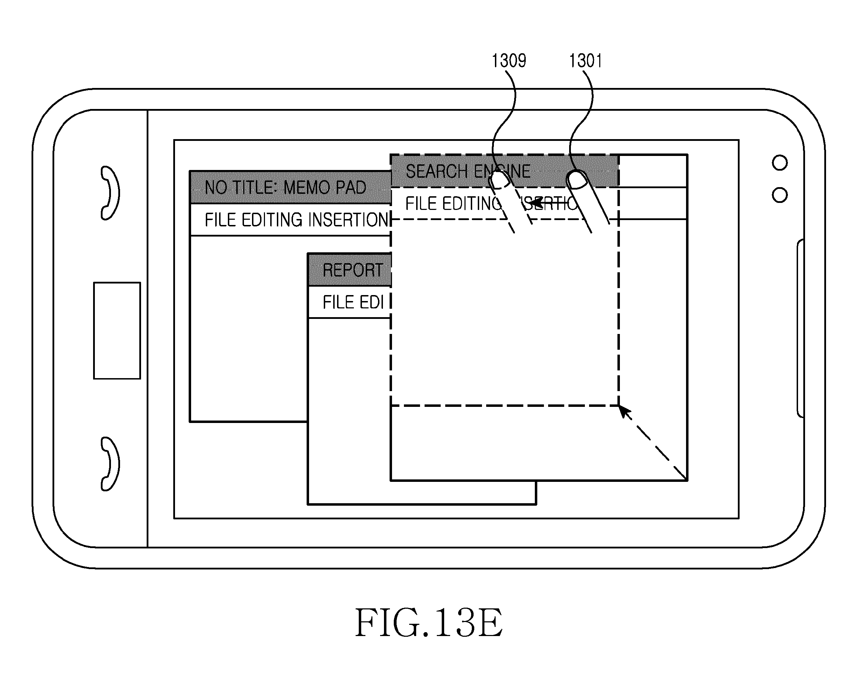

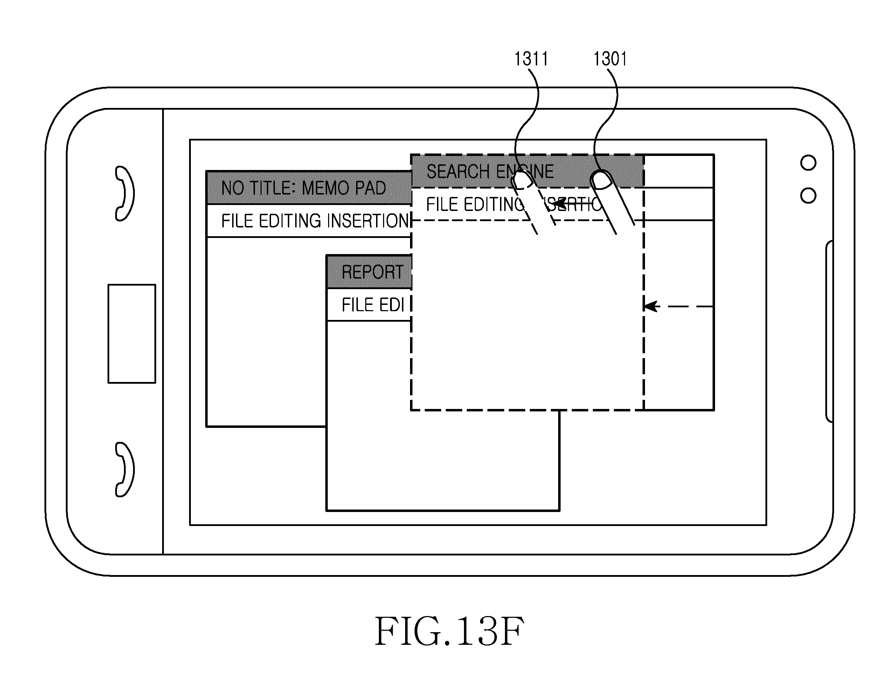

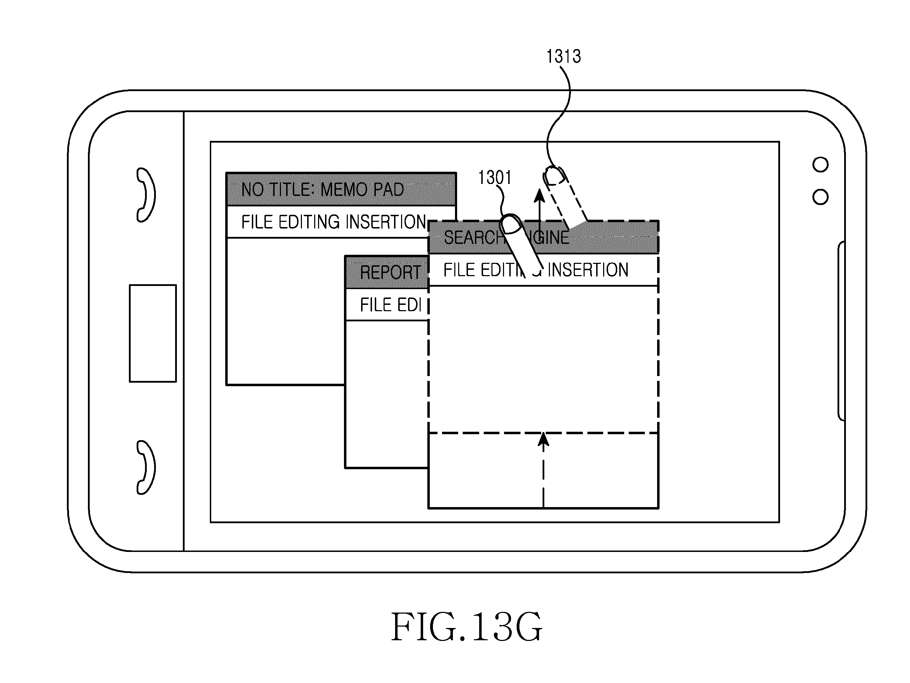

In alternate embodiment of the present invention, the electronic device may reduce a size of the first window in consideration of the change information of the first touch point sensed after a size adjustment event is generated. For example, the electronic device may reduce, as shown in FIG. 13E, the entire size of the first window according to a distance change 1309 of the first touch point 1301. For another example, as shown in FIG. 13F, when the first touch point 1301 is dragged to the left, the electronic device may reduce a right side of the first window. Also, as shown in FIG. 13G, when the first touch point 1301 is dragged up, the electronic device may reduce a lower size of the first window. H

As described above, the electronic device adjusts the size of the first window according to the change of the first touch point sensed after a size adjustment event is generated.

FIG. 12 is a flowchart illustrating a process of adjusting a size of a window in consideration of drag information according to another embodiment of the present invention.

Referring to FIG. 12 and FIGs. 13A to 13G, an electronic device determines whether a first touch for a first window is sensed in step 1201. For example, the electronic device displays, as shown in FIG. 13A, as explained previously.

When the first touch for the first window is not sensed, the electronic device ends the algorithm of FIG. 12.

On the other hand, when the first touch for the first window is sensed, the electronic device proceeds to step 1203 and determines whether a duration time of the first touch exceeds a reference time to determine whether a size change event is generated.

When the duration time of the first touch is less than or equal to the reference time, the electronic device proceeds to step 1205 and determines whether the first touch is released.

When the first touch is released, the electronic device recognizes that the size change event is not generated. Accordingly, the electronic device ends the algorithm of FIG. 12.

On the other hand, when the first touch is not released, the electronic device proceeds to step 1203 and compares the duration time of the first touch with the reference time.

If the duration time of the first touch exceeds the reference time, the electronic device proceeds to step 1207 and generates a size adjustment event for the first window. Herein, the electronic device may display size adjustment event generation information on the display unit.

The electronic device proceeds to step 1209 and determines whether a first touch point is changed. For example, the electronic device determines whether a drag by the first touch is generated.

When the first touch point is changed, the electronic device proceeds to step 1211 and adjusts a size of the first window in consideration of change information of the first touch point. Herein, the change information of the first touch point includes a distance change of the first touch point and a change direction of the first touch point. For example, the electronic device may enlarge or reduce, as shown in FIGs. 13B to 13G, a size of the first window in consideration of change information of a first touch point 1301.

Thereafter, if the first touch point is continuously moved, the electronic device proceeds to step 1213 and determines whether a change distance of the first touch point is less than or equal to a reference distance. Herein, the electronic device may adjust a size of the first window continuously in consideration of the change information of the first touch point.

When the change distance of the first touch point is greater than the reference distance, the electronic device proceeds to step 1217 and changes the size of the first window to the entire screen size. Herein, a size of the first window may not be adjusted according to touch information before an entire screen size release event is generated. Accordingly, when a size adjustment event according to touch information is generated on the first window of the entire screen size, the electronic device may enlarge/reduce contents displayed on the first window.

On the other hand, when the change distance of the first touch point is less than or equal to the reference distance, the electronic device proceeds to step 1215 and determines whether the first touch is released.

When the first touch is not released, the electronic device proceeds to step 1211 and adjusts a size of the first window in consideration of the change information of the first touch point.

On the other hand, when the first touch is released, the electronic device ends the algorithm of FIG. 12.

As described above, the electronic device may adjust the size of the first window according to the change information of the first touch point. Herein, only when the first touch for a size adjustment region of the first window continues over a reference time, the electronic device may generate a size change event. Herein, the size adjustment region is a partial region which is set on the first window to sense a size adjustment event, and may include a title bar, a menu bar, etc.

If the electronic device generates a size change event only when sensing the first touch for a size adjustment region, it may enlarge/reduce contents displayed on the first window in consideration of touch information about a region except for the size adjustment region.

FIG. 14 is a flowchart illustrating a process of enlarging a size of a window in consideration of touch information according to another embodiment of the present invention. FIGs. 15A and 15D are screens illustrating the operation process of FIG. 14.

Referring to FIG. 14 and FIGs. 15A and 15B, an electronic device determines whether a size adjustment event for a first window is generated in step 1401. For example, the electronic device displays, as shown in FIG. 15A, a first window which is a user interface screen for a first application program, a second window which is a user interface screen for a second application program, and a third window which is a user interface screen for a third application program on a display unit. Herein, the electronic device determines whether a continuous double tap 1501 for a size adjustment region of the first window is sensed. Herein, the size adjustment region is a partial region which is set on the first window to sense a size adjustment event, and may include a title bar, a menu bar, etc.

When the size adjustment event for the first window is not generated, the electronic device ends the algorithm of FIG. 14.

On the other hand, when the size adjustment event for the first window is generated, the electronic device proceeds to step 1403 and determines a size of the first window displayed on the display unit.

The electronic device proceeds to step 1405 and determines whether the size of the first window displayed on the display unit is less than the entire screen size.

When the size of the first window displayed on the display unit is less than the entire screen size, the electronic device recognizes that the size of the first window may be enlarged. Accordingly, the electronic device proceeds to step 1407 and may enlarge the size of the first window by a predetermined amount. For example, as shown in FIG. 15A, when a continuous tap for a title bar which is a size adjustment region of the first window is sensed, the electronic device may enlarge a size of the first window to a certain size 1503 by a predetermined amount.

On the other hand, when the size of the first window displayed on the display unit is greater than or equal to the entire screen size, the electronic device recognize that the size of the first window may not be enlarged. Accordingly, the electronic device proceeds to step 1409 and may reduce the size of the first window to a minimum screen size. For example, the electronic device may reduce, as shown in FIG. 15B, a size of the first window to a minimum screen size 1505. The electronic device ends the algorithm of FIG. 14.

FIG. 16 is a flowchart illustrating a process of reducing a size of a window in consideration of touch information according to another embodiment of the present invention. FIGs. 17A and 17B are screens illustrating the operation steps of FIG. 16.

Referring to FIG. 16 and FIGs. 17A and 17B, an electronic device determines whether a size adjustment event for a first window is generated in step 1601. For example, the electronic device displays, as shown in FIG. 17A, a first window which is a user interface screen for a first application program, a second window which is a user interface screen for a second application program, and a third window which is a user interface screen for a third application program on a display unit. Herein, the electronic device determines whether a continuous double tap 1701 for a size adjustment region of the first window is sensed. Herein, the size adjustment region is a partial region which is set on the first window to sense a size adjustment event, and may include a title bar, a menu bar, etc.

When the size adjustment event for the first window is not generated, the electronic device ends the algorithm of FIG. 16.

On the other hand, when the size adjustment event for the first window is generated, the electronic device proceeds to step 1603 and determines a size of the first window displayed on the display unit.

The electronic device proceeds to step 1605 and determines whether the size of the first window displayed on the display unit is greater than a minimum screen size.

When the size of the first window displayed on the display unit is greater than the minimum screen size, the electronic device recognizes that the size of the first window may be reduced. Accordingly, the electronic device proceeds to step 1607 and may reduce the size of the first window by a reference size. For example, as shown in FIG. 17A, when a continuous tap for a title bar which is a size adjustment region of the first window is sensed, the electronic device may reduce a size of the first window to a certain size 1703 by a reference size.

On the other hand, when the size of the first window displayed on the display unit is less than or equal to the minimum screen size, the electronic device recognizes that the size of the first window may not be reduced. Accordingly, the electronic device proceeds to step 1609 and may enlarge the size of the first window to the entire screen size. For example, the electronic device may enlarge, as shown in FIG. 17B, a size of the first window 1705 will be enlarged in response to the continuous taps until overs the entire screen size 1705. Herein, the size of the first window may not be adjusted according to touch information before an entire screen size release event is generated. Accordingly, when a size adjusts event according to touch information is generated on the first window of the entire screen size, the electronic device may enlarge/reduce contents displayed on the first window.

The electronic device ends the algorithm of FIG. 16.

In one embodiment of the present invention described above, the electronic device adjusts at least one of a right size and a lower size of a window according to touch information

In another embodiment of the present invention, the electronic device may adjust at least one of a left size and an upper size of a window according to touch information.

In another embodiment of the present invention, the electronic device may adjust the entire size of a window according to touch information.

In another embodiment of the present invention, the electronic device may adjust a size of a window in all directions (up/down/left/right directions) set by a user according to touch information.

Methods according to claims of the present invention and/or embodiments described in the specification of the present invention may be implemented as hardware, software, or combinational type of the hardware and the software.

When the method is implemented by the software, a computer-readable storage medium for storing one or more programs (software modules) may be provided. The one or more programs stored in the computer-readable storage medium are configured for being executed by one or more processors in an electronic device. The one or more programs include instructions for allowing an electronic device to execute the methods according to the claims of the present invention and/or the embodiments described in the specification of the present invention.

These programs (software module, software) may be stored in a Random Access Memory (RAM), a non-volatile memory including a flash memory, a Read Only Memory (ROM), an Electrically Erasable Programmable ROM (EEPROM), a magnetic disc storage device, a Compact Disc-ROM (CD-ROM), a Digital Versatile Disc (DVD) or an optical storage device of a different type, and a magnetic cassette. Or, the programs may be stored in a memory configured by combination of some or all of them. Also, the configured memory may include a plurality of memories.

Also, the programs may be stored in an attachable storage device capable of accessing an electronic device through each of communication networks such as the Internet, an intranet, a Local Area Network (LAN), a Wide LAN (WLAN), and a Storage Area Network (SAN) or a communication network configured by combination of them. This storage device may connect to the electronic device through an external port.

Also, a separate storage device on a communication network may connect to a portable electronic device.

As described above, the electronic device having a touch screen may adjust a size of a window easily according to preferences of a user by adjusting a size of any one of at least one or more windows displayed on the display unit.

While the present invention has been particularly shown and described with reference to exemplary embodiments thereof, it will be understood by those skilled in the art that various changes in form and details may be made therein without departing from the spirit and scope of the present invention as defined by the appended claims.

## Claims

1. A method of adjusting a size of a window in an electronic device including a touch screen, the method comprising:
sensing multi-touch in a first window; and
adjusting a size of the first window according to a change of the multi-touched points.

2. The method of claim 1, further comprising displaying a plurality of windows on a display unit before the multi-touch is sensed,
wherein the sensing of the multi-touch comprises sensing the multi-touch for any one of the plurality of windows displayed on the display unit.

3. The method of claim 1, wherein the sensing of the multi-touch comprises sensing touch in a first region of on the first window,
wherein the first region includes at least one of a title bar and a menu bar.

4. The method of claim 1, wherein the adjustment of the size of the first window comprises adjusting the size of the first window according to at least one of a change in a distance between the multi-touched points and a direction change by one of the multi-touched points.

5. The method of claim 1, wherein the adjustment of the size of the first window comprises adjusting the size of the first window to display on an entire screen when the change between the multi-touched points is greater than a predetermined reference distance.

6. A method of adjusting a size of a window in an electronic device including a touch screen, the method comprising:
sensing a touch in a first window; and
adjusting a size of the first window according to change of the touched point.

7. The method of claim 6, further comprising displaying a plurality of windows on a display unit before the touch is sensed,
wherein the sensing of the touch comprises sensing the touch for any one of the plurality of windows displayed on the display unit.

8. The method of claim 6, wherein the sensing of the touch comprise determining whether a touch in a first region on the first window is sensed,
wherein the first region includes at least one of a title bar and a menu bar.

9. The method of claim 6, further comprising determining whether a change event is generated according to a duration time of the touch ,
wherein the adjustment of the size of the first window comprises adjusting the size of the first window according to change of the touched point when the change event is generated.

10. The method of claim 6, wherein the adjustment of the size of the first window comprises adjusting the size of the first window according to at least one of a distance change by the touched points and a direction change by the touched points.

11. The method of claim 6, wherein the adjustment of the size of the first window comprises adjusting the size of the first window to display on an entire screen when a distance change by the touched points is greater than a reference distance.

12. An electronic device comprising:
a touch screen;
a memory; and
a processor coupled to the memory,
wherein, the processor is arranged to implement a method according to any one of the claims 1 to 6.

13. An electronic device comprising:
a touch screen;
a memory; and
a processor coupled to the memory,
wherein, the processor is arranged to implement a method according to any one of the claims 7 to 11.
